(19) **Europäisches Patentamt**
**European Patent Office**
**Office européen des brevets**

(11) **EP 2 015 978 B1**

(12) **FASCICULE DE BREVET EUROPEEN**

(45) Date de publication et mention
de la délivrance du brevet:
**14.07.2010 Bulletin 2010/28**

(21) Numéro de dépôt: **07731340.1**

(22) Date de dépôt: **23.04.2007**

(51) Int Cl.:
**B62D 3/12** (2006.01)          **B62D 7/09** (2006.01)

(86) Numéro de dépôt international:
**PCT/FR2007/000680**

(87) Numéro de publication internationale:
**WO 2007/128898 (15.11.2007 Gazette 2007/46)**

(54) **VEHICULE AUTOMOBILE A DIRECTION A CREMAILLERE**

KRAFTFAHRZEUG MIT ZAHNSTANGENLENKUNG

RACK STEERING MOTOR VEHICLE

(84) Etats contractants désignés:
**DE ES GB IT**

(30) Priorité: **05.05.2006 FR 0604053**

(43) Date de publication de la demande:
**21.01.2009 Bulletin 2009/04**

(73) Titulaire: **Rey, André**
**81100 Castres (FR)**

(72) Inventeur: **Rey, André**
**81100 Castres (FR)**

(74) Mandataire: **Cabinet BARRE LAFORGUE & associés**
**95, rue des Amidonniers**
**31000 Toulouse (FR)**

(56) Documents cités:
**FR-A- 1 405 629**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

L'invention concerne une direction de véhicule automobile et un véhicule équipé d'une telle direction.

Un véhicule comprend usuellement au moins quatre roues dont au moins deux roues directrices à l'avant du véhicule. Chaque roue directrice est portée par une fusée, dont est rigidement solidaire un bras dit bras de pivot de fusée. Chaque bras de pivot de fusée présente une extrémité solidaire de la fusée à laquelle il est associé, et une extrémité opposée dite extrémité d'actionnement. Ladite fusée et ledit bras de pivot de fusée sont montés rotatifs autour d'un axe dit axe de pivot de fusée. Le véhicule comprend par ailleurs une direction permettant d'entraîner et de contrôler le braquage des roues directrices avant autour des axes de pivot de fusée. La direction comprend notamment une colonne de direction commandée généralement par un volant pouvant être actionné par un conducteur, et une barre d'accouplement qui permet de relier les extrémités d'actionnement des bras de pivot de fusée des deux roues directrices avant, en vue d'un braquage couplé desdites roues. La barre d'accouplement est généralement rattachée aux deux bras de pivot de fusée par l'intermédiaire de deux leviers d'accouplement, qui, entre autres, assurent la compatibilité de la direction avec la suspension du véhicule (on rappelle que les organes de direction et de suspension sont reliés d'une part à l'essieu et d'autre part au châssis du véhicule. Une compatibilité est obtenue lorsque les mouvements de la suspension n'entraînent pas un braquage des roues ou que l'influence de la suspension sur le braquage des roues est négligeable).

A noter que les roues directrices avant des véhicules légers sont généralement indépendantes. A l'inverse, les véhicules lourds comprennent généralement un essieu rigide reliant rigidement les fusées des roues avant directrices. Dans toute la suite, le terme "essieu" désignera un essieu fictif (droite reliant les deux fusées et coupant les deux axes de pivot de fusée) si les roues sont indépendantes ou un essieu réel dans le cas contraire.

Il existe principalement deux types de direction :

- les directions à bielle pendante, comprenant un boîtier de direction dont le mécanisme à vis permet de transformer une rotation axiale de la colonne de direction en un pivotement d'une bielle pendante, laquelle bielle pendante entraîne en translation axiale une bielle de direction agencée longitudinalement dans le véhicule. La bielle de direction est articulée sur un levier d'attaque solidaire de la fusée de l'une des deux roues directrices, de sorte qu'une translation axiale de la bielle de direction entraîne une rotation du levier d'attaque (et donc de la roue) autour de l'axe de pivot de fusée (l'autre roue braquant également grâce à la barre d'accouplement) ;
- les directions à crémaillère, qui comprennent un pignon entraîné par la colonne de direction, lequel pignon engrène sur une crémaillère formée sur la barre d'accouplement : une rotation axiale de la colonne de direction est ainsi directement transformée en une translation axiale de la barre d'accouplement (translation selon une direction transversale du véhicule), laquelle translation entraîne un braquage des roues. Le pignon et la crémaillère sont logés dans un boîtier de crémaillère monté fixe par rapport au châssis. L'axe de rotation et la position du pignon sont donc fixes par rapport au châssis ; la barre d'accouplement s'étend et est guidée en translation axiale selon une direction transversale fixe par rapport au châssis. La présence de leviers d'accouplement (entre ladite barre et chaque bras de pivot de fusée) est par conséquent indispensable pour autoriser une translation de la barre d'accouplement.

Il est à noter que, plus la dimension des bras de pivot de fusée selon la direction longitudinale du véhicule est grande (c'est-à-dire plus la barre d'accouplement est éloignée du plan vertical contenant l'essieu avant), plus la translation de la barre d'accouplement doit être importante pour un angle de braquage (de l'une des roues) donné. En d'autres termes, les angles de braquage des roues correspondant à une translation donnée de la barre d'accouplement sont d'autant plus grands que la dimension des bras de pivot de fusée selon la direction longitudinale du véhicule est petite. Or, dans le cas d'une direction à crémaillère, la translation de la barre d'accouplement est, par construction, limitée, compte tenu de son agencement au sein du véhicule (guidage en translation et liaison aux bras de pivot de fusée). Dans le cas d'une direction à bielle pendante, cette limitation est souhaitable pour éviter que la barre d'accouplement ne dépasse latéralement de la carrosserie. C'est pourquoi, afin de ne pas restreindre indûment les angles maximaux de braquage des roues, la barre d'accouplement est toujours agencée à faible distance du plan vertical contenant l'essieu avant.

A ce jour, les véhicules lourds sont presque tous équipés de directions à bielle pendante. En revanche, les véhicules légers sont très majoritairement équipés de directions à crémaillère, qui, comparativement aux directions à bielle pendante, présentent l'avantage d'une conception plus simple, d'un coût moindre et d'un meilleur confort de conduite. En effet, de par leur conception, les boîtiers à vis (des directions à bielle pendante) sont particulièrement onéreux et ne permettent pas d'absorber totalement les chocs subis par les roues (chocs qui sont par conséquent en partie transmis à la colonne de direction et que le conducteur peut ressentir dans le volant).

Pour qu'un virage se fasse sans glissement des roues du véhicule sur le sol, celles-ci doivent décrire des courbes ayant un même centre instantané de rotation. En d'autres termes, les axes de toutes les roues du véhicule doivent constamment concourir en un même point.

Dans le cas d'un véhicule à quatre roues dont seules les roues avant sont directrices, les axes des roues avant doivent donc à chaque instant se couper en un même point situé dans le prolongement de l'essieu arrière. Pour obtenir un virage sans glissement, à chaque valeur de l'angle de braquage β de la roue avant intérieure au virage correspond donc une unique valeur de l'angle de braquage α de la roue avant extérieure au virage, différente de celle de l'angle β.

Par ailleurs, les règles et normes de sécurité nationales et internationales imposent toutes que la direction d'un véhicule soit entièrement mécanique. Il est bien sûr permis de doter la direction de moyens d'assistance hydrauliques ou pneumatiques, intégrant éventuellement des moyens de contrôle électroniques, à condition que la commande de l'angle de braquage de chaque roue directrice reste purement mécanique de bout en bout.

Jeantaud a initialement proposé, dans le cas particulier d'un véhicule doté d'un essieu rigide et d'une direction à bielle pendante, une épure simple qui offre une solution approchée au problème du virage sans glissement. Dans cette épure, la barre d'accouplement est de longueur fixe. Par ailleurs, la barre d'accouplement, l'essieu avant et les bras de pivot de fusée forment un trapèze déformable, les bras de pivot de fusée s'étendant selon des directions qui se rencontrent légèrement en avant du milieu de l'essieu arrière lorsque les roues sont droites (c'est-à-dire lorsqu'elles présentent toutes deux un angle de braquage nul). En d'autres termes, chaque bras de pivot de fusée forme un angle non nul avec le plan de la roue dont il est solidaire, angle dont la tangente est proche de v/2e, où "v" désigne la voie du véhicule (longueur de l'essieu) et "e" désigne l'empattement du véhicule (distance séparant les essieux avant et arrière).

Cette solution n'est rigoureusement correcte que pour un unique angle de virage du véhicule (c'est-à-dire pour un unique couple d'angles (α, β) de braquage des roues). Elle reste acceptable pour de petits angles de virage, les déformations des pneumatiques compensant l'erreur entre les angles de braquage des deux roues. En revanche, pour des angles supérieurs à 40°, cette solution est totalement inacceptable, de sorte qu'il est nécessaire d'interdire mécaniquement tout virage d'angle supérieur à 40°. En tout état de cause, le fait qu'il ne s'agisse que d'une solution approchée au problème du virage sans glissement se traduit par une usure prématurée des pneumatiques.

Par ailleurs, cette solution ne s'applique qu'aux directions à bielle pendante, aujourd'hui délaissées (car trop onéreuses et moins confortables) pour ce qui concerne les véhicules légers.

Pour réaliser rigoureusement les conditions d'un virage sans glissement, il a été envisagé d'actionner séparément chaque roue directrice. Mais toutes les solutions mécaniques proposées à ce jour sont restées inexploitées compte tenu de leur extrême complexité, de leur encombrement et de leur coût de fabrication.

Soucieux de trouver une solution au problème du virage sans glissement qui, d'une part soit compatible avec une direction à crémaillère, et d'autre part autorise des angles de braquage supérieurs à 40°, l'inventeur a précédemment proposé, dans son brevet FR 1 405 629, qui représente l'état de l'art antérieur le plus proche, de remplacer la barre d'accouplement rigide du véhicule par deux demi-barres articulées, en vue de disposer d'une "barre d'accouplement fictive" de longueur variable. Il avait en effet constaté que les conditions d'un virage sans glissement impliquent également que la distance L séparant les extrémités d'actionnement des deux bras de pivot de fusée varie en fonction de l'angle de braquage des roues. L'inventeur a notamment démontré qu'à chaque valeur de l'angle de braquage β de la roue intérieure au virage, correspond une unique valeur de la distance L, définie par les équations suivantes :

$$L = \frac{v + \ell(\sin\beta - \sin\alpha)}{\cos\theta}$$

$$tg\,\alpha = \frac{e}{v + \dfrac{e}{tg\beta}}$$

$$tg\,\theta = \frac{\ell(\cos\alpha - \cos\beta)}{v + \ell(\sin\beta - \sin\alpha)}$$

où "v" désigne la voie du véhicule,

"ℓ" désigne la longueur des bras de pivot de fusée,
"e" désigne l'empattement du véhicule,
"θ" désigne l'angle que forme la barre d'accouplement par rapport à l'essieu avant,

et dans le cas particulier d'un véhicule dont chaque fusée de roue avant est horizontale (angle de carrossage nul), chaque axe de pivot de fusée est vertical (angle d'inclinaison nul) et s'étend dans le plan de l'essieu avant (angle de chasse nul), chaque bras de pivot de fusée s'étend à l'avant de l'essieu avant et orthogonalement à la fusée dont il est solidaire (c'est-à-dire parallèlement au plan de la roue).

A noter que des équations différentes peuvent être obtenues si, par hypothèse, l'un ou plusieurs des angles de carrossage, d'inclinaison et de chasse est/sont non nul(s) et/ou si les bras de pivot de fusée s'étendent à l'arrière de l'essieu avant et/ou si chaque bras de pivot de fusée forme un angle non nul avec le plan de la roue dont il est solidaire. L'inventeur a cependant démontré que, dans tous les cas, la distance L ne dépend finalement que de β et de paramètres fixes du véhicule.

La direction que l'inventeur a proposée dans FR 1 405 629 comprend deux demi-barres d'accouplement s'étendant dans des plans parallèles, chaque demi-barre étant articulée, à une extrémité, à l'autre demi-barre et étant reliée, à l'autre extrémité, à un bras de pivot de fusée. Les demi-barres sont articulées l'une à l'autre au moyen d'un arbre dont la rotation axiale est commandée par la colonne de direction. Ledit arbre porte, de chaque côté des demi-barres, un roulement qui coulisse dans une fente du boîtier de crémaillère définissant un chemin de roulement à ligne brisée, et un pignon qui engrène sur une crémaillère à ligne brisée.

Cette direction présente l'avantage d'autoriser des angles de braquage supérieurs à 40° (et pouvant aller jusqu'à 90°) et d'améliorer ainsi la maniabilité du véhicule (qu'il est désormais possible de faire tourner sur lui-même). Mais cette direction n'offre qu'une solution approchée au problème du virage sans glissement. De plus, sa réalisation est délicate et sa pérennité n'est pas garantie : les dents des crémaillères doivent être usinées avec une grande précision notamment aux points d'inflexion de la ligne brisée, pour permettre un passage sans heurt des pignons d'un segment à l'autre de ladite ligne brisée ; ces points d'inflexion restent des points de faiblesse et d'usure des crémaillères.

Suite à cette proposition, les constructeurs automobiles se sont attelés à développer des solutions intégrant une barre d'accouplement (à crémaillère) de longueur variable. US 6 272 409 et US 5 143 400 préconisent ainsi d'équiper le véhicule d'une barre d'accouplement télescopique dotée de moyens pneumatiques, hydrauliques ou mécaniques permettant de faire varier sa longueur, et de commander lesdits moyens par un circuit électronique, apte à calculer en temps réel la longueur que devrait avoir ladite barre pour remplir les conditions d'un virage sans glissement en fonction de l'angle de braquage de l'une des deux roues. Comme précédemment expliqué, ces solutions électroniques, qui se heurtent aux règles et normes de sécurité, ne peuvent trouver aucune application pratique.

L'invention vise à pallier ces inconvénients en proposant pour la première fois une direction à crémaillère réalisant une solution purement mécanique et théoriquement exacte -en l'absence de suspension du véhicule- au problème du virage sans glissement, en particulier pour des angles de virage compris entre 0 et 40°. L'invention vise également à fournir une direction de véhicule qui permette un virage sans glissement pour des angles supérieurs à 40°.

Un objectif de l'invention est de fournir une direction de véhicule qui autorise des angles de virage pouvant aller jusqu'à 90°. L'invention vise notamment à résoudre, pour des angles supérieurs à 40°, non seulement le problème du virage sans glissement mais aussi celui de l'arc-boutement (expliqué plus loin).

Un autre objectif de l'invention est de proposer une direction de véhicule simple de conception, robuste et peu onéreuse.

Tous les modèles de véhicule ne disposent pas du même espace pour loger la direction. En outre, les dimensions du bloc avant du véhicule - et par conséquent de l'espace disponible pour loger la direction- tendent aujourd'hui à se réduire au profit de l'habitable et d'une plus grande compacité des véhicules. Un autre objectif de l'invention est de proposer une gamme de directions de véhicule compatible avec la plupart des modèles de véhicule connus et récents, laquelle gamme comprend des directions de conception similaire mais de géométries et d'encombrements différents.

Un autre objectif de l'invention est de fournir une direction à crémaillère qui satisfasse aux nouvelles normes de choc.

Un autre objectif de l'invention est de fournir une direction compatible avec divers types de suspension.

L'invention concerne un véhicule automobile comprenant :

- un châssis,
- des roues dont au moins deux roues directrices à l'avant du véhicule, chaque roue directrice étant portée par une fusée dont est rigidement solidaire un bras dit bras de pivot de fusée, ladite fusée et ledit bras de pivot de fusée étant montés rotatifs autour d'un axe dit axe de pivot de fusée, le bras de pivot de fusée présentant une extrémité solidaire de la fusée et une extrémité opposée dite extrémité d'actionnement,

- une direction comprenant :

  ■ une colonne de direction commandée, en rotation axiale, par un volant de direction pouvant être actionné par un conducteur du véhicule,
  ■ un pignon entraîné en rotation par la colonne de direction,
  ■ une crémaillère sur laquelle engrène le pignon,
  ■ un boîtier de crémaillère recevant ledit pignon et ladite crémaillère.

Le véhicule selon l'invention est caractérisé en ce que :

- la direction comprend un ensemble formant barre, dit barre de direction, ladite barre de direction comprenant au moins deux éléments coaxiaux montés coulissants l'un par rapport à l'autre selon une direction axiale de ladite barre de direction, l'un des éléments étant dit élément directeur, l'autre élément étant dit élément dirigé ; de préférence, la barre de direction s'étend selon une direction sensiblement transversale du châssis lorsque les roues sont droites,

- l'élément directeur traverse le boîtier de crémaillère et porte la crémaillère, de telle sorte qu'une rotation du pignon entraîne une translation de l'élément directeur selon la direction axiale de la barre de direction,
- le boîtier de crémaillère comprend une plaque, dite plaque de correction, comprenant une fente formant glissière, dite glissière de correction, recevant un galet adapté pour se déplacer le long de ladite glissière de correction,
- la direction comprend deux bras, dits bras de correction, l'un desdits bras de correction étant monté articulé, à une extrémité, au galet et, à l'autre extrémité, à l'élément directeur, l'autre bras de correction étant monté articulé, à une extrémité, au galet, et, à l'autre extrémité, à l'élément dirigé, de telle

sorte que la barre de direction et les deux bras de correction forment un triangle déformable selon la position du galet dans la glissière de correction,

- la direction comprend des moyens de montage du boîtier de crémaillère au sein du véhicule, adaptés pour autoriser un pivotement du boîtier de crémaillère dans un plan dit plan de direction, autour d'un axe dudit boîtier dit axe d'attache, les moyens de montage étant de plus adaptés pour interdire tout déplacement de l'axe d'attache selon une direction transversale du châssis et pour autoriser un déplacement dudit axe d'attache selon une direction contenue dans le plan de direction et dans un plan longitudinal du châssis,
- la colonne de direction est adaptée pour absorber tout déplacement du boîtier de crémaillère ; par exemple, la colonne de direction comprend au moins deux parties coaxiales montées coulissantes l'une par rapport à l'autre selon une direction axiale de la colonne de direction, dont une partie accouplée à l'axe du volant et une partie accouplée au pignon, de sorte que la distance entre le pignon et le volant peut varier ; par ailleurs, au moins l'un des accouplements reliant la colonne de direction au pignon et à l'axe de volant comprend un joint de cardan (ou équivalent) de façon à pouvoir absorber une variation de l'angle formé par ladite colonne de direction et ledit axe du volant ou pignon ;
- la direction comprend une première timonerie reliant l'élément directeur à l'extrémité d'actionnement de l'un, premier, des bras de pivot de fusée, et une deuxième timonerie reliant l'élément dirigé à l'extrémité d'actionnement du deuxième bras de pivot de fusée,
- la glissière de correction suit une courbe adaptée, selon les première et deuxième timoneries, pour que les fusées des roues du véhicule s'étendent selon des directions qui se coupent, à chaque instant, en un même point. En particulier, dans le cas le plus fréquent d'un véhicule dont seules les roues avant sont directrices, la glissière de correction suit une courbe adaptée pour que les fusées des roues avant du véhicule s'étendent selon des directions qui se coupent, à chaque instant, en un même point situé sur l'axe de l'essieu arrière.

La barre de direction selon l'invention présente une dimension, dite longueur de direction, variable, définie comme étant la distance séparant un point de référence de l'élément dirigé d'un point de référence de l'élément directeur. Les exemples développés ci-après permettront de comprendre que, pour que les conditions d'un virage sans glissement soient remplies, à chaque angle $\beta$ de braquage de l'une des roues correspond une unique valeur de cette longueur de direction (comme cela a précédemment été démontré par l'inventeur pour la longueur d'une barre d'accouplement usuelle) et donc une unique position du galet sur la plaque de correction. On peut ainsi définir point par point, ou éventuellement en posant des équations simples de trigonométrie et de géométrie, la courbe que doit décrire le galet et par conséquent la glissière de correction pour que soient remplies les conditions d'un virage sans glissement. Cette courbe dépend d'une unique variable : elle dépend en revanche de nombreux paramètres géométriques fixes : outre les paramètres de construction du véhicule précédemment évoqués (voie, empattement, angle de chasse, de carrossage et d'inclinaison), elle dépend également, d'une part, de la géométrie choisie pour la barre de direction, le boîtier de crémaillère et les bras de correction -et notamment des dimensions des éléments directeur et dirigé, de la longueur de chaque bras de correction et de l'emplacement de l'articulation dudit bras sur l'élément de la barre de direction correspondant, de la position du boîtier de crémaillère par rapport à la barre de direction selon la direction transversale du châssis, etc...-. La courbe dépend d'autre part des timoneries choisies. Il est donc impossible de définir une équation générale de cette courbe couvrant tous les cas de figure. La description qui suit fournira quelques exemples. Et l'homme du métier pourra définir (points par points), sans avoir à développer une activité inventive, la courbe que doit suivre la glissière de correction dans chaque cas particulier, selon le véhicule et selon les choix de construction qu'il aura opérés.

Comme on pourra le constater, le plan de direction peut être positionné à une distance quelconque des roues directrices avant et de façon à définir un angle quelconque avec un plan horizontal, sous réserve d'adapter les timoneries en fonction de la position choisie. D'un véhicule à l'autre, l'emplacement du boîtier de crémaillère et de sa plaque de correction pourra varier, en fonction de l'espace disponible au sein du véhicule. Il est donc possible de proposer toute une gamme de directions (comprenant chacune boîtier et timonerie) compatibles avec de nombreux modèles de véhicule.

Dans une première version de l'invention :

- la barre de direction s'étend à proximité de l'essieu avant, par exemple entre les roues directrices avant,
- la première timonerie comprend un premier levier d'accouplement, articulé respectivement sur une extrémité de l'élément directeur et sur l'extrémité d'actionnement du premier bras de pivot de fusée ; de préférence, ledit premier levier est articulé sur le bras de pivot de fusée par une liaison rotule et il est articulé sur l'élément directeur par une liaison pivot,
- la deuxième timonerie comprend un deuxième levier d'accouplement, articulé respectivement sur une extrémité de l'élément dirigé et sur l'extrémité d'actionnement du deuxième bras de pivot de fusée ; de préférence, ledit deuxième levier est articulé sur le bras de pivot de fusée par une liaison rotule et il est articulé sur l'élément dirigé par une liaison pivot.

En d'autres termes, dans cette première version, la barre de direction selon l'invention fait office de barre d'accouplement au sens usuel du terme : elle s'étend sensiblement entre les deux roues directrices avant et est reliée aux bras de pivot de fusée par l'intermédiaire de deux leviers d'accouplement. Toutefois, contrairement aux barres d'accouplement usuelles, compte tenu des moyens de montage selon l'invention, la barre de direction n'est pas guidée en translation selon une direction transversale fixe par rapport au châssis. Elle est, au contraire, amenée à se déplacer dans le plan de direction. Les déplacements subséquents du pignon sont absorbés par la colonne de direction et ne sont donc pas transmis au volant.

Dans cette première version de l'invention, le plan de direction est de préférence sensiblement horizontal, et le boîtier de crémaillère et la barre de direction sont par exemple agencés sous la boîte de vitesse du véhicule.

Avantageusement et selon l'invention, dans cette première version, la direction comprend au moins un compas de niveau reliant l'un des éléments de la barre de direction au châssis. De préférence, la direction comprend deux compas de niveau, l'un reliant l'élément directeur au châssis, l'autre reliant l'élément dirigé au châssis.

Dans une deuxième et une troisième version de l'invention :

- le véhicule est dépourvu de barre d'accouplement,
- la première timonerie comprend une biellette, dite biellette de support, qui s'étend dans un plan parallèle (et notamment confondu) au plan de direction et qui porte l'élément directeur de la barre de direction, ladite biellette de support étant montée pivotante, à une extrémité dite extrémité de rotation, autour d'un axe fixe par rapport au châssis et étant articulée, à l'autre extrémité, sur l'élément directeur ; à noter que l'élément directeur peut être suspendu à la biellette de support ou soutenu (par-dessous) par celle-ci ;

- la deuxième timonerie comprend une biellette, dite biellette de support, qui s'étend dans un plan parallèle (et notamment confondu) au plan de direction et qui porte l'élément dirigé de la barre de direction, ladite biellette de support étant montée pivotante, à une extrémité dite extrémité de rotation, autour d'un axe fixe par rapport au châssis et étant articulée, à l'autre extrémité, sur l'élément dirigé ; à noter que l'élément dirigé peut être suspendu à sa biellette de support ou soutenu par celle-ci.

Dans la deuxième version, les première et deuxième timoneries comprennent également chacune au moins :

- une tige, dite tige menante, qui s'étend orthogonalement à la biellette de support, laquelle tige présente une extrémité, dite extrémité amont, accouplée à l'extrémité de rotation de la biellette de support par l'intermédiaire d'un accouplement adapté pour transformer un pivotement de la biellette de support en une rotation axiale de la tige menante, ladite tige menante étant de préférence guidée en rotation axiale au sein du véhicule au moyen d'au moins un palier fixe par rapport au châssis, l'extrémité opposée de la tige menante étant dite extrémité aval,
- une tige, dite tige menée, qui présente une extrémité, dite extrémité amont, reliée à la tige menante par l'intermédiaire d'organes, dits organes intermédiaires, adaptés pour transformer une rotation axiale de la tige menante en une rotation axiale de la tige menée, ladite tige menée étant de préférence guidée en rotation axiale au sein du véhicule au moyen d'au moins un palier fixe par rapport au châssis, ladite tige menée présentant une extrémité opposée dite extrémité aval,
- un levier non parallèle à la tige menée, lequel levier présente une extrémité, dite extrémité amont du levier, accouplée à l'extrémité aval de la tige menée par l'intermédiaire d'un accouplement adapté pour transformer une rotation axiale de la tige menée en une rotation du levier autour de l'axe de ladite tige menée, l'extrémité opposée du levier étant dite extrémité aval du levier,
- une biellette dite biellette de liaison, librement articulée, à une extrémité, sur l'extrémité aval du levier et, à l'autre extrémité, sur l'extrémité d'actionnement du bras de pivot de fusée (les termes "librement articulé" signifiant, dans toute la description, qu'il s'agit d'une liaison rotule). A noter que les deux biellettes de liaison assurent la compatibilité entre la direction et la suspension.

Les accouplements susmentionnés sont de préférence des accouplements homocinétiques tels que des accouplements rigides.

Les organes intermédiaires, intercalés entre la tige menante et la tige menée, comprennent par exemple un renvoi d'angle accouplant directement l'extrémité aval de la tige menante et l'extrémité amont de la tige menée. En variante, avantageusement et selon l'invention, ces organes intermédiaires comprennent une tige, dite tige intermédiaire, non parallèle aux tiges menante et menée, ladite tige intermédiaire étant accouplée, à une extrémité, à l'extrémité aval de la tige menante par l'intermédiaire d'un renvoi d'angle adapté pour transformer une rotation axiale de la tige menante en une rotation axiale de la tige intermédiaire, ladite tige intermédiaire étant accouplée, à l'autre extrémité, à l'extrémité amont de la tige menée par l'intermédiaire d'un renvoi d'angle adapté pour transformer une rotation axiale de la tige intermédiaire en une rotation axiale de la tige menée. En variante, les organes intermédiaires comprennent une succession de plusieurs tiges intermédiaires reliées entre elles et aux tiges menante et menée par des renvois d'angle, lesdites tiges intermédiaires étant, si nécessaire, guidées en rotation axiale au moyen de paliers fixes par rapport au châssis.

Les renvois d'angles susmentionnés sont de préférence des renvois homocinétiques : renvois d'angle par couple conique, joints de cardan, etc..

Dans la troisième version, les première et deuxième timoneries comprennent également chacune au moins :

- une première tige qui s'étend selon une direction sensiblement transversale fixe par rapport au châssis, et qui présente une extrémité, dite extrémité amont, accouplée à l'extrémité de rotation de la biellette de support par l'intermédiaire d'un accouplement adapté pour transformer un pivotement de la biellette de support en une rotation axiale de la première tige, ladite première tige étant de préférence guidée en rotation axiale au moyen d'au moins un palier fixe par rapport au châssis, l'extrémité opposée de la première tige étant dite extrémité aval,
- une bielle pendante dite bielle pendante primaire, non parallèle à la première tige (et de préférence orthogonale à ladite tige), laquelle bielle pendante primaire présente une extrémité, dite extrémité amont, accouplée à l'extrémité aval de la première tige par l'intermédiaire d'un accouplement adapté pour transformer une rotation axiale de la première tige en une rotation de la bielle pendante primaire autour de l'axe de la première tige, l'extrémité opposée de ladite bielle pendante primaire étant dite extrémité aval,
- une deuxième tige qui s'étend selon une direction sensiblement longitudinale fixe par rapport au châssis, et qui présente une extrémité, dite extrémité amont, articulée à l'extrémité aval de la bielle pendante primaire, et une extrémité opposée dite extrémité aval,
- une bielle pendante dite bielle pendante secondaire, montée pivotante, à une extrémité dite extrémité de rotation, autour d'un axe s'étendant selon une direction sensiblement transversale fixe par rapport au châssis, ladite bielle pendante secondaire présentant une extrémité opposée, dite extrémité de commande, sur laquelle est articulée l'extrémité aval de la deuxième tige,
- une bielle dite bielle de direction, librement articulée, à une extrémité dite extrémité amont, sur l'extrémité de commande de la bielle

pendante secondaire et, à une extrémité opposée dite extrémité aval, sur l'extrémité d'actionnement du bras de pivot de fusée.

En variante, la bielle de direction est directement articulée sur l'extrémité aval de la bielle pendante primaire, et la deuxième tige et la bielle pendante secondaire sont supprimées.

Dans ces deuxième et troisième versions de l'invention, le véhicule est donc dépourvu d'une barre d'accouplement au sens usuel du terme qui, associée à des leviers d'accouplement, relie directement les bras de pivot de fusée. En revanche, la barre de direction selon l'invention réalise une sorte de "barre d'accouplement déportée", qui couple indirectement par l'intermédiaire des deux timoneries- le fonctionnement des deux bras de pivot de fusée. Le fait de disposer d'une barre de direction ainsi "déportée" offre une grande souplesse d'adaptation de la direction selon l'invention à la géométrie du véhicule : l'emplacement de la barre de direction et du boîtier de crémaillère peut être choisi en fonction de l'espace disponible au sein du véhicule. La timonerie est ensuite définie en fonction d'une part de la distance séparant la barre de direction des bras de pivot de fusée, et d'autre .part des obstacles à contourner (boîte de vitesse, moteur...). La timonerie selon l'invention permet donc, non seulement de reporter les variations de la longueur de direction aux bras de pivot de fusée et d'imposer ainsi des angles de braquage instantanés différents aux deux roues avant directrices, mais aussi de loger le boîtier de crémaillère et la barre de direction selon l'invention dans la majorité des modèles de véhicule connus.

Il est à noter que l'idée qui a présidé à la conception de ces deuxième et troisième versions de l'invention, et selon laquelle il est possible de déporter la crémaillère à distance des roues avant, va totalement à l'encontre d'un préjugé de l'homme du métier, pour qui la crémaillère d'une direction à crémaillère est toujours agencée à proximité de l'essieu avant, sur la barre d'accouplement.

Avantageusement et selon l'invention, dans la deuxième version de l'invention, le boîtier de crémaillère et la barre de direction sont agencés entre le tablier et le moteur du véhicule. Cette deuxième version est ainsi particulièrement adaptée aux véhicules légers modernes, qui répondent à une volonté de réduction des dimensions du bloc avant (espace dédié à la mécanique, sous le capot avant) au profit de l'habitacle, et dont le moteur est agencé transversalement, pour des raisons de sécurité (en cas de choc, le moteur sert de bouclier et ne pénètre pas dans l'habitable...) et d'encombrement. Dans ces véhicules, le seul emplacement disponible pour loger la direction selon l'invention reste l'espace séparant le moteur du tablier. A noter que l'inclinaison du plan de direction (angle qu'il forme avec l'horizontale) est également déterminée par l'espace disponible pour loger la direction. Le plan de direction est par exemple sensiblement vertical.

Avantageusement et selon l'invention, dans la troisième version de l'invention, le boîtier de crémaillère et la barre de direction sont agencés dans une partie postérieure du véhicule (par exemple au niveau du coffre arrière). A noter que cette troisième version de l'invention est particulièrement adaptée aux véhicules lourds à essieu rigide. Elle peut même être installée sur un véhicule existant, sous réserve d'en supprimer la barre d'accouplement et les bras de pivot de fusée existants, d'en conserver les leviers d'attaque, les bielles de direction et les bielles pendantes existantes à titre, respectivement, de bras de pivot de fusée, bielles de direction et bielles pendantes secondaires selon l'invention.

Il est également possible de loger le boîtier de crémaillère et la barre de direction dans une partie postérieure du véhicule dans la deuxième version de l'invention, et entre le tablier et le moteur dans la troisième version de l'invention.

L'invention, dans ces trois versions, permet également de résoudre le problème de l'arc-boutement. Dans la grande majorité des directions connues, à l'instar de l'épure de Jeantaud, chaque bras de pivot de fusée s'étend à l'arrière de l'essieu avant en formant un angle avec le plan de la roue (géométrie en trapèze), et la crémaillère est formée sur une barre d'accouplement, qui, associée à deux leviers d'accouplement, relie directement les bras de pivot de fusée. Dans ces directions antérieures, l'angle maximal de braquage de chaque roue est limité par la géométrie même de la direction. En effet, au fur et à mesure que l'angle de virage du véhicule augmente, la barre d'accouplement, le levier d'accouplement et le bras de pivot de fusée de la roue intérieure au virage (ou roue extérieure au virage, selon la position relative de la barre d'accouplement et de l'essieu) tendent à s'aligner. Il peut éventuellement se produire une situation extrême dans laquelle ces trois éléments sont alignés ; la direction est alors bloquée.

En fournissant, dans la première version, une barre d'accouplement (la barre de direction) de longueur variable, l'invention permet d'abandonner la géométrie en trapèze des directions antérieures et de doter chaque roue d'un bras de pivot de fusée parallèle au plan de la roue, résolvant ainsi le problème de l'arc-boutement. De même, en supprimant, dans les deuxième et troisième versions, la barre d'accouplement au profit d'une barre de direction déportée et d'une timonerie adaptée, l'invention permet de résoudre le problème de l'arc-boutement.

Avantageusement et selon l'invention, dans les première et deuxième versions, chaque bras de pivot de fusée s'étend sensiblement parallèlement au plan de la roue à laquelle il est associé. Dans la troisième version, chaque bras de pivot de fusée s'étend de préférence orthogonalement au plan de la roue à laquelle il est associé.

Avantageusement et selon l'invention, la plaque de correction du boîtier de crémaillère s'étend dans un plan parallèle au plan de direction, et par exemple confondu avec le plan de direction (cette caractéristique permet de minimiser le volume occupé par ladite plaque lors de ses déplacements -au cours d'un virage-). En variante, la plaque de correction forme un angle avec ledit plan de direction.

Avantageusement et selon l'invention, les moyens de montage comprennent :

- un étrier formé de deux chapes en regard et d'une âme, l'étrier étant monté sur le boîtier de crémaillère de telle sorte que le boîtier puisse pivoter par rapport à l'étrier autour d'un axe définissant l'axe d'attache du boîtier, les chapes de l'étrier s'étendant de part et d'autre dudit boîtier ; par exemple, les moyens de montage comprennent un pivot traversant le boîtier sur l'axe d'attache et reliant les deux chapes de l'étrier ; en variante, les moyens de montage comprennent deux pivots sur l'axe d'attache, chaque pivot reliant l'une des chapes de l'étrier et une face du boîtier de crémaillère (face du boîtier en regard de ladite chape),
- une coulisse s'étendant dans un plan sensiblement parallèle (et par exemple confondu) au plan de direction, de préférence sensiblement orthogonalement à la barre de direction lorsque les roues sont droites, laquelle coulisse présente une extrémité fixée à l'étrier, de préférence à son âme,
- un palier dans lequel la coulisse peut coulisser, ledit palier étant monté fixe par rapport au châssis. Par exemple, le palier est fixé au châssis ou au tablier du véhicule.

Avantageusement et selon l'invention, l'élément directeur est une barre formant coulisse et l'élément dirigé est un coulisseau enfilé sur ladite coulisse. En variante, l'un des éléments de la barre de direction (par exemple l'élément dirigé) est une tige et l'autre élément (par exemple l'élément directeur) est un tube dans lequel ladite tige peut coulisser.

Avantageusement et selon l'invention :

- la plaque de correction est formée d'au moins deux panneaux superposés présentant chacun une fente, lesdites fentes se superposant pour former la glissière de correction, lesdites fentes présentant des largeurs différentes,
- le galet est formé d'au moins deux disques superposés, l'un, premier, desdits disques étant agencé dans la fente de l'un, premier, des panneaux, le deuxième disque étant agencé dans la fente du deuxième panneau, le premier disque présentant un diamètre inférieur à la largeur de la fente du premier panneau et étant agencé de telle sorte qu'un jeu soit ménagé entre ledit disque et ladite fente le long d'un bord longitudinal de la glissière de correction, le deuxième disque présentant un diamètre inférieur à la largeur de la fente du deuxième panneau et étant agencé de telle sorte qu'un jeu soit ménagé entre ledit disque et ladite fente le long de l'autre bord longitudinal de la glissière de correction.

Ce mode de réalisation de la plaque de correction et du galet garantit un parfait roulement, dans les deux sens et sans jeu, du galet dans la glissière de correction.

L'inventeur a déterminé qu'il pouvait être utile de pouvoir braquer les deux roues avant d'un même angle de 90° alors que la voiture est à l'arrêt, en vue de faciliter certaines manoeuvres telles que le garage en créneau du véhicule. Certes, dans le cas d'un véhicule dont seules les roues avant sont directrices, cette situation de braquage des roues ne vérifie pas les conditions d'un virage sans glissement. Toutefois, ce type de manoeuvre étant effectué à très faible vitesse (le véhicule est initialement à l'arrêt, puis est tourné sur place) et de façon ponctuelle, ce défaut n'a que peu d'importance. En variante, le véhicule est avantageusement équipé de roues arrières directrices ou simplement d'un dispositif permettant, de façon ponctuelle, de braquer également les roues arrière d'un même angle de 90°, autorisant ainsi un déplacement latéral (et sans glissement) du véhicule.

Pour permettre un braquage simultané à 90° des deux roues avant directrices :

- la glissière de correction est prolongée à chacune de ses extrémités par deux fentes formant glissières, dites glissières de braquage à 90°,
- la direction est munie de moyens, dits moyens de déplacement du boîtier, adaptés pour, lorsqu'ils sont actionnés par le conducteur du véhicule et que les roues sont en position de virage sans glissement à 90°, pouvoir déplacer le boîtier de crémaillère de façon à contraindre le galet à se déplacer dans l'une ou l'autre des glissières de braquage à 90° ; ces moyens de déplacement du boîtier peuvent être des moyens mécaniques, hydrauliques ou pneumatiques, intégrant ou non des moyens de contrôle électroniques,
- chaque glissière de braquage à 90° suit une courbe adaptée pour permettre, lorsque les moyens de déplacement du boîtier sont actionnés, une rotation de la roue extérieure au virage depuis un angle de braquage correspondant à un virage sans glissement à 90° jusqu'à un angle sensiblement égal à 90°, sans modifier l'angle de braquage de la roue intérieure au virage.

L'inventeur a également souhaité permettre une transformation du véhicule, soit pour produire des effets spéciaux, soit pour faciliter certaines manoeuvres notamment lorsque le véhicule est équipé de roues arrière directrices ou d'un dispositif permettant, de façon ponctuelle, de braquer également les roues arrière. Pour ce faire, avantageusement et selon l'invention :

- la plaque de correction comprend une seconde fente formant glissière, dite glissière de fonctionnement spécial, dans laquelle le galet peut se déplacer, la glissière de correction et la glissière de fonctionnement spécial étant confondues en une zone dite zone d'aiguillage,
- la direction comprend des moyens d'aiguilletage, qui déterminent un mode de fonctionnement normal dans lequel le galet est guidé dans la glissière de correction, et un mode de fonctionnement spécial dans lequel le galet est guidé dans la glissière de fonctionnement spécial, la direction comprenant des moyens de commande des moyens d'aiguillage par le conducteur du véhicule.

L'invention concerne également un véhicule caractérisé par tout ou partie des caractéristiques mentionnées ci-dessus et ci-après.

D'autres buts, caractéristiques et avantages de l'invention apparaîtront à la lecture de la description suivante, qui se réfère aux figures annexées représentant des modes de réalisation préférentiels de l'invention, donnés uniquement à titre d'exemples non limitatifs, et dans lesquelles :

- les figures 1 à 3 sont des vues de dessus schématiques représentant un mode de réalisation de la première version de l'invention, illustrant respectivement une situation dans laquelle les roues sont droites, un virage à gauche et un virage à droite ;
- la figure 4 est une vue en perspective d'une partie d'un véhicule intégrant une direction telle que celle illustrée aux figures 1 à 3 ;
- les figures 5 et 6 sont des vues en perspective schématiques d'un mode de réalisation de la deuxième version de l'invention, illustrant respectivement une situation dans laquelle les roues sont droites et un virage à gauche ;
- la figure 7 est une vue en perspective d'une partie d'un véhicule intégrant la direction illustrée aux figures 5 et 6 ;
- la figure 8 est une vue de face d'un autre mode de réalisation d'une direction selon la deuxième version de l'invention ;
- la figure 9 est une vue en coupe de la direction de la figure 8 selon un plan AA sensiblement orthogonal à la barre de direction ;
- la figure 10 est une vue en coupe d'une première portion de la direction de la figure 8 selon un plan longitudinal médian de ladite barre de direction, ladite portion comprenant une extrémité longitudinale du boîtier de crémaillère, de laquelle sort l'élément directeur ;

- la figure 11 est une vue en coupe de la direction de la figure 8 selon un plan BB sensiblement orthogonal à ladite barre de direction ;
- la figure 12 est une vue en coupe d'une partie de la direction de la figure 8 selon un plan CC sensiblement orthogonal à ladite barre de direction ;
- la figure 13 est une vue en coupe d'une deuxième portion de la direction de la figure 8 selon un plan longitudinal médian de ladite barre de direction, ladite portion comprenant l'autre extrémité longitudinale du boîtier de crémaillère, de laquelle sort l'élément directeur ;
- la figure 14 est une vue en coupe de la direction de la figure 8 selon un plan DD sensiblement orthogonal à ladite barre de direction ;
- la figure 15 est vue en perspective d'une partie d'un véhicule intégrant un autre mode de réalisation d'une direction selon la deuxième version de l'invention ;
- les figures 16 et 17 sont des vues de dessus schématiques représentant un autre mode de réalisation de la première version de l'invention, illustrant respectivement un virage à droite à 90° sans glissement et une situation dans laquelle les roues sont toutes deux braquées à 90° à droite ;
- la figure 18 est une vue schématique en perspective d'un mode de réalisation de la troisième version de l'invention ;
- la figure 19 est une de dessus schématique d'un autre mode de réalisation de la première version de l'invention.

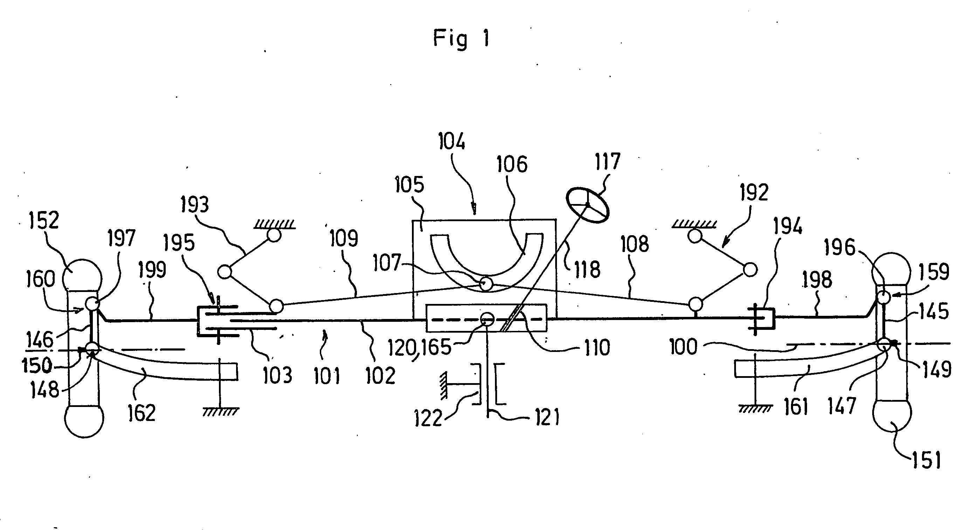

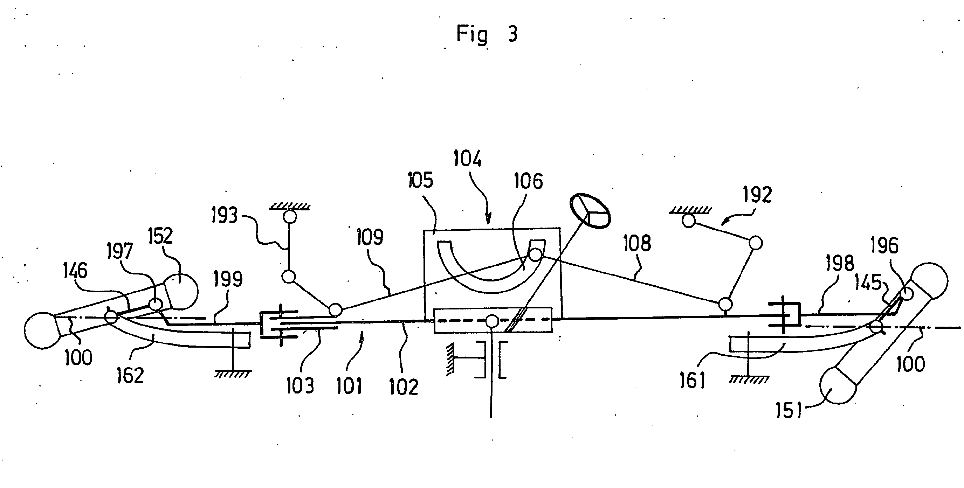

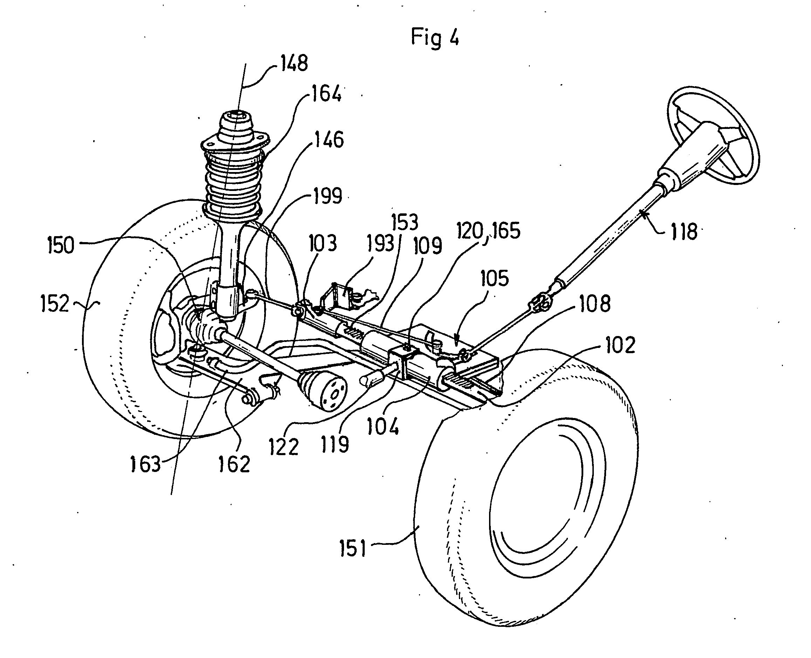

Le véhicule selon l'invention illustré aux figures 1 à 4, comprend :

- deux roues avant directrices 151, 152. Chaque roue est portée par une fusée 149, 150 et est associée à un bras de pivot de fusée 145, 146 solidaire de la fusée en rotation autour d'un axe de pivot de fusée 147, 148. Chaque bras de pivot de fusée présente une extrémité d'actionnement 159, 160 permettant de commander le braquage de la roue. Dans l'exemple illustré, chaque bras de pivot de fusée s'étend sensiblement parallèlement au plan de la roue à laquelle il est associé, en vue de supprimer tout risque d'arc-boutement. Par ailleurs, chaque fusée est suspendue à un triangle inférieur de suspension 161, 162 et à un ressort supérieur de suspension 164. Les deux triangles inférieurs de suspension sont reliés, de façon connue, par une barre stabilisatrice 163 ;
- une barre de direction 101, comprenant un élément directeur 102 en forme de tige et un élément dirigé 103 en forme de tube dans lequel une extrémité longitudinale de la tige 102 est insérée. L'élément directeur 102 porte une crémaillère 153 ;
- un boîtier de crémaillère 104 traversé par l'élément directeur 102, comprenant une portion tubulaire recevant l'élément directeur 102, une plaque de correction 105 présentant une fente 106 traversante formant une glissière de correction, et un galet 107 apte à glisser ou à rouler à l'intérieur de la glissière de correction. La crémaillère 153 présente une longueur suffisante pour que le boîtier de crémaillère soit traversé par la crémaillère pour tous angles de braquage des roues compris entre 0 et 90°. Dans cet exemple, le boîtier de crémaillère 104 s'étend sensiblement en une partie centrale de la barre de direction 101 et du véhicule, lorsque les roues 151 et 152 sont droites (figure 1). En variante, il est possible de décaler latéralement le boîtier de crémaillère, sous réserve de modifier en conséquence la courbe suivie par la glissière de correction 106 ;
- un pignon 110, qui est logé dans le boîtier de crémaillère 104 et engrène sur la crémaillère 153 ;
- un volant 117, dont une rotation est transmise au pignon 110 par l'intermédiaire d'une colonne de direction 118 télescopique formée de deux parties coulissantes ;
- deux bras de correction 108, 109, le bras de correction 108 étant articulé (par des liaisons pivots) d'une part sur l'élément directeur 102 et d'autre part sur le galet 107, le bras de correction 109 étant articulé (par des liaisons pivots) d'une part sur l'élément dirigé 103 et d'autre part sur le galet 107. Dans cet exemple non limitatif, les bras de correction sont articulés sur la barre de direction (c'est-à-dire respectivement sur l'élément directeur et sur l'élément dirigé) en des points proches des extrémités longitudinales de ladite barre. Il est possible de doter la direction de bras de correction plus courts, articulés sur la barre de direction en deux points plus éloignés de ses extrémités longitudinales ;
- des moyens de montage du boîtier de crémaillère au sein du véhicule, comprenant un étrier 119 sur lequel le boîtier de crémaillère est articulé au moyen de deux pivots opposés 120 s'étendant selon un même axe d'attache 165. Les moyens de montage comprennent également une coulisse 121 qui s'étend selon une direction longitudinale du châssis, sensiblement orthogonalement à la barre de direction lorsque les roues sont droites, laquelle coulisse est adaptée pour coulisser dans un palier 122 fixé au châssis. Le plan comprenant la barre de direction 101 et la coulisse 121 est dit plan de direction. Les pivots 120 sont sensiblement orthogonaux au plan de direction. Le boîtier de crémaillère est ainsi autorisé à se déplacer dans le plan de direction, en pivotant autour de son axe d'attache 165, lequel axe d'attache peut se déplacer en translation selon une direction, fixe par rapport au châssis, définie par la coulisse 121. Les bras de correction 108, 109 sont contraints à se déplacer dans des plans parallèles au plan de direction. La plaque de correction 105 s'étend sensiblement dans le plan de direction. Dans cet exemple, le plan de direction et donc la coulisse 121 sont sensiblement horizontaux ;

- deux leviers d'accouplement 198, 199. Le levier d'accouplement 198 est articulé, d'une part sur une extrémité de l'élément directeur 102 (extrémité de l'élément directeur formant une extrémité de la barre de direction) au moyen d'une liaison pivot 194, et d'autre part sur l'extrémité d'actionnement du bras de pivot de fusée 145 au moyen d'une liaison rotule 196. Le levier d'accouplement 199 est articulé d'une part sur une extrémité de l'élément dirigé 103 (extrémité de l'élément dirigé formant une extrémité de la barre de direction) au moyen d'une liaison pivot 195, et d'autre part sur l'extrémité d'actionnement du bras de pivot de fusée 146 au moyen d'une liaison rotule 197. Le levier d'accouplement 198 et ses articulations réalisent la première timonerie selon invention ; le levier d'accouplement 199 et ses articulations réalisent la deuxième timonerie selon l'invention. A noter que les deux leviers d'accouplement sont coudés à proximité des bras de pivot de fusée, de façon à rapprocher la barre de direction 101 de l'essieu (fictif) 100, éviter que le levier d'accouplement correspondant ne vienne toucher la roue intérieure au virage et autoriser ainsi des angles de braquage importants, allant jusqu'à 90°. A noter également que la barre de direction 101 et les leviers d'accouplement 198 et 199 sont conçus de telle sorte que l'articulation 194 (respectivement 195) du levier d'accouplement 198 (respectivement 199) soit située dans le plan longitudinal contenant l'axe de pivotement du triangle inférieur de suspension 161 (respectivement 162) lorsque les roues sont droites (voir figure 1), en vue d'une meilleure compatibilité entre la direction et la suspension. De cette façon, lorsque le véhicule roule en ligne droite (angles de braquage des roues nuls), la suspension n'influe pas sur la direction. L'influence de la suspension sur la direction ne survient qu'en cas de braquage important des roues (ce qui normalement signifie que le véhicule se déplace à faible vitesse) et cette influence est négligeable ;
- deux compas de niveau 192, 193 permettant de stabiliser la barre de direction. Le compas de niveau 192 est articulé d'une part au châssis et d'autre part à l'élément directeur 102; de préférence au niveau de l'articulation du bras de correction 108 sur ledit élément directeur. Le compas de niveau 193 est articulé d'une part au châssis et d'autre part à l'élément dirigé 103, de préférence au niveau de l'articulation du bras de correction 109 sur ledit élément dirigé.

La distance séparant l'articulation 194, prise comme point de référence de l'élément directeur, et l'articulation 195, prise comme point de référence de l'élément dirigé, est dite longueur de direction (en l'exemple, cette longueur correspond sensiblement à la longueur totale de la barre de direction). La distance séparant les deux extrémités d'actionnement 196 et 197 des bras de pivot de fusée dépend de cette longueur de direction, qui varie selon la position du galet 107 dans la glissière de correction 106.

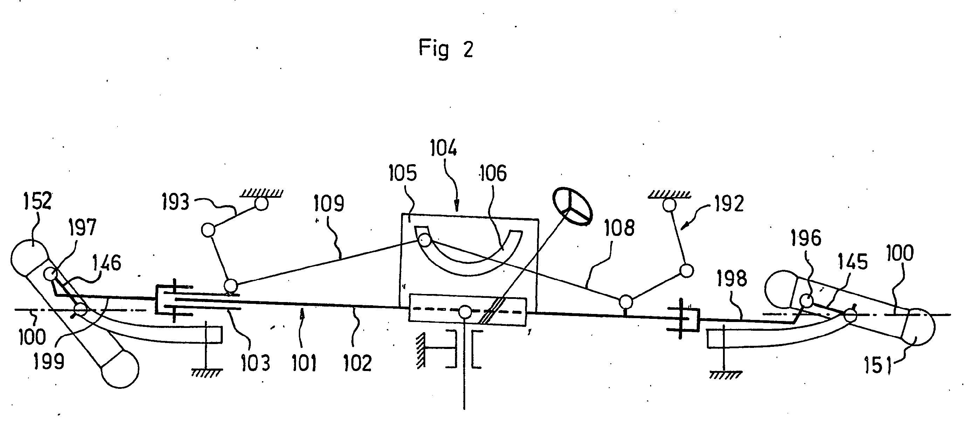

Lorsque le volant 117 est tourné vers la gauche (figure 2), le pignon 110, entraîné par la colonne de direction, déplace la crémaillère 153 et donc l'élément directeur 102 vers la droite du véhicule (c'est-à-dire vers la gauche de la figure 2) en translation selon la direction axiale de la barre de direction (qui est aussi la direction axiale de l'élément directeur 102 et de l'élément dirigé 103 -à noter que cette direction n'est pas fixe par rapport au châssis-). La translation de l'élément directeur 102 entraîne, par l'intermédiaire du bras de correction 108, un déplacement du galet 107 dans la glissière de correction, et donc, par l'intermédiaire du bras de correction 109, une translation de l'élément dirigé 103 selon la direction axiale de la barre de direction. Le galet s'éloignant de la barre de direction 101, la longueur de direction diminue, de sorte que l'angle de braquage de la roue gauche 151 (roue intérieure au virage) est supérieur à l'angle de braquage de la roue droite 152 (roue extérieure au virage). La courbe que suit la glissière de correction a été tracée, point par point pour chaque angle de rotation du pignon, pour que ces angles de braquage satisfassent aux conditions d'un virage sans glissement.

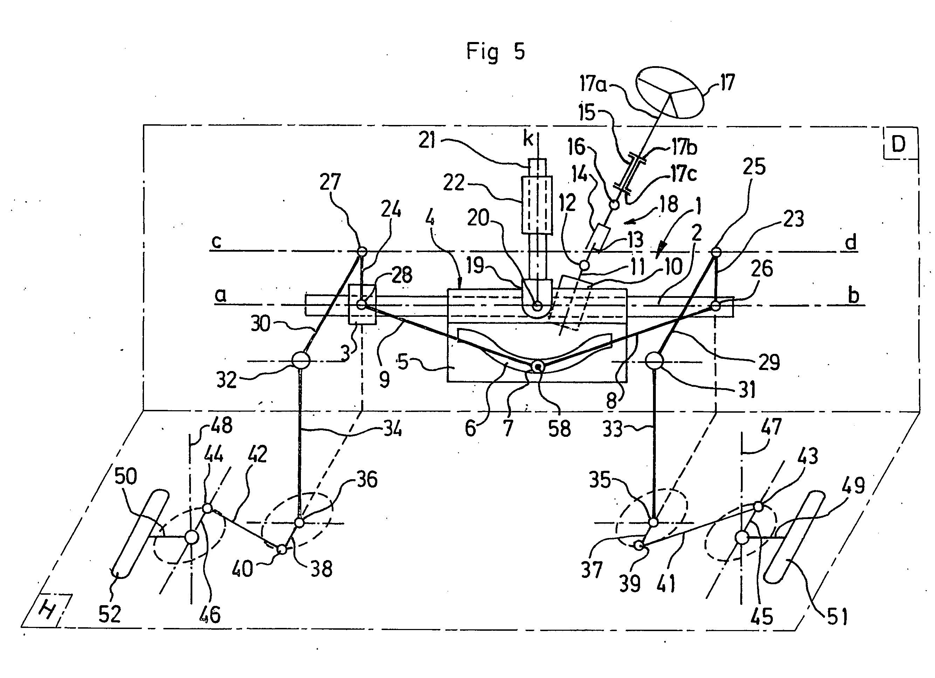

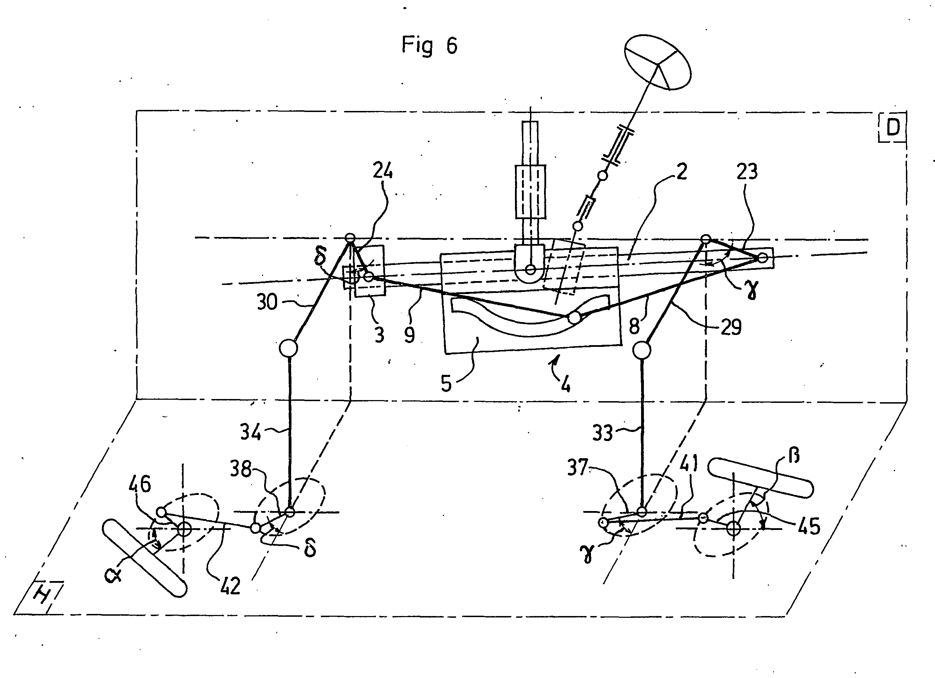

Les figures 5 et 6 illustrent un mode de réalisation de la deuxième version de l'invention. De façon similaire au mode de réalisation précédemment décrit, la direction du véhicule comprend, dans cette deuxième version :

- une barre de direction 1 formée par un élément directeur 2 en forme de coulisse, ledit élément directeur portant une crémaillère, et un élément dirigé 3 en forme de coulisseau, ces deux éléments étant montés coulissants l'un par rapport à l'autre selon la direction axiale de la barre de direction 1 ;
- un boîtier de crémaillère 4 traversé par l'élément directeur 2, et dans lequel est logé un pignon 10 qui engrène sur la crémaillère ; le boîtier de crémaillère comprend en outre une plaque de correction 5 présentant une fente 6 (traversante) recevant un galet 7 ;
- un volant 17 comprenant un arbre de volant 17a; l'arbre de volant est monté rotatif dans le châssis à l'aide d'un palier 15 fixé au tablier du véhicule ; toute translation dudit arbre selon son axe est par ailleurs interdite par deux butées 17b et 17c coopérant avec le palier 15 ;
- une colonne de direction 18 télescopique comprenant deux parties solidaires en rotation axiale et montées coulissantes l'une par rapport à l'autre, à savoir :

   ■ un fût cylindrique 14 intérieurement cannelé, accouplé à l'arbre de volant 17a par un joint de cardan 16, de sorte qu'une rotation du volant 17 entraîne une rotation du fût 14,

■ un arbre 13 extérieurement cannelé, qui s'étend en partie à l'intérieur du fût 14 et peut coulisser axialement à l'intérieur dudit fût 14 ; les cannelures conjuguées de l'arbre 13 et du fût 14 permettent de transmettre à l'arbre 13 une rotation du fût 14 ; par ailleurs, l'arbre 13 est accouplé au pignon 10 par un joint de cardan 12, de sorte qu'une rotation de l'arbre 13 entraîne une rotation du pignon 10 ;

- deux bras de correction 8 et 9 ; le bras de correction 8 est articulé, d'une part, sur une extrémité de l'élément directeur 2 au moyen d'un pivot 26 et, d'autre part, sur le galet 7 au moyen d'un axe 58 ; le bras de correction 9 est articulé, d'une part, sur l'élément dirigé (coulisseau), 3 au moyen d'un pivot 28 et, d'autre part, sur le galet 7 au moyen de l'axe 58 ; la distance séparant le pivot 26 (qui définit un point de référence sur l'élément directeur) et le pivot 28 (qui définit un point de référence sur l'élément dirigé) est dite longueur de direction ; cette distance varie selon la position du galet 7 ;

- des moyens de montage du boîtier de crémaillère au sein du véhicule, qui comprennent une coulisse 21 dont une extrémité porte un étrier 19 chevauchant le boîtier de crémaillère 4, et un palier 22 fixé au tablier et dans lequel peut coulisser librement la coulisse 21 ; le boîtier de crémaillère 4 est monté pivotant par rapport à l'étrier 19 autour d'un axe d'attache 20, au moyen de deux pivots agencés de part et d'autre du boîtier de crémaillère. Dans cet exemple, le plan de direction D contenant la coulisse 21 et la barre de direction 1 est vertical. Par ailleurs, la plaque de correction 5 s'étend dans le plan de direction. La barre de

direction et le boîtier de crémaillère sont avantageusement logés entre le tablier et le moteur du véhicule.

Les références 47 et 48 désignent les axes de pivot de fusée des roues 51, 52, lesquelles roues sont portées par des fusées 49, 50. Chaque bras de pivot de fusée 45, 46 est, en l'exemple, parallèle au plan de la roue 51, 52 à laquelle il est associé.

Les première et deuxième versions de l'invention diffèrent par la structure de leurs première et deuxième timoneries. Dans le mode de réalisation de la deuxième version illustré aux figures 5 et 6, la première timonerie comprend :

- une biellette de support 23 articulée, à une extrémité, sur l'élément directeur 2 au moyen du pivot 26, et montée pivotante, à l'autre extrémité dite extrémité de rotation, par rapport au châssis (par exemple sur un élément du tablier) au moyen d'une liaison pivot 25,

- une tige menante 29 agencée orthogonalement à la biellette de support 23, et dont une extrémité amont est reliée à l'extrémité de rotation de la biellette de support par un accouplement rigide 66, de sorte qu'un pivotement de la biellette de support selon un angle donné est transformé en une rotation de la tige menante autour de son axe selon le même angle ; de préférence, la tige menante 29 est guidée en rotation axiale par au moins un palier fixe par rapport au châssis ;

- une tige menée 33, dont une extrémité amont est reliée à l'extrémité aval de la tige menante 29 au moyen d'un couple de pignons coniques 31 (ou autre renvoi d'angle homocinétique, tel qu'un joint de cardan), de sorte qu'une rotation axiale de la tige menante selon un angle donné est transformée en une rotation de la tige menée autour de son axe selon le même angle ; la tige menée 33 est guidée en rotation axiale par au moins un palier fixe par rapport au châssis,

- un levier 37, qui s'étend sensiblement orthogonalement à la tige menée et dont une extrémité amont est reliée à l'extrémité aval de la tige menée 33 au moyen d'un accouplement rigide 35, de sorte qu'une rotation axiale de la tige menée selon un angle donné est transformée en une rotation du levier autour de l'axe de la tige menée selon le même angle,

- une biellette de liaison 41, dont une extrémité est librement articulée à l'extrémité aval du levier 37 au moyen d'une liaison rotule 39 et dont l'autre extrémité est librement articulée à l'extrémité d'actionnement du bras de pivot de fusée 45 au moyen d'une liaison rotule 43.

La deuxième timonerie comprend de même une biellette de support 24, articulée sur l'élément dirigé 3 au moyen du pivot 28 et montée pivotante par rapport au châssis au moyen d'une liaison pivot 27, une tige menante 30 reliée à la biellette de support 24 par un accouplement rigide 67, une tige menée 34 reliée à la tige menante 30 par un couple de pignons coniques 32 (renvoi d'angle), un levier 38 relié à la tige menée 34 par un accouplement rigide 36, une biellette de liaison 42 librement articulée sur le levier 38 par une liaison rotule 40 et sur l'extrémité d'actionnement du bras de pivot de fusée par une liaison rotule 44.

Lorsque le volant 17 est tourné vers la gauche, la crémaillère est déplacée vers la gauche du véhicule (c'est-à-dire vers la droite sur la figure 6) en translation selon la direction axiale de la barre de direction 1, entraînant en rotation la biellette de support 23 d'un angle γ. Le bras de correction 8, entraîné par l'élément directeur 2, déplace le galet 7 le long de la glissière de correction 6, lequel galet entraîne le bras de correction 9 relié à l'élément dirigé 3. La biellette de support 24 pivote ainsi d'un angle δ. Le galet 7 s'étend rapproché de la barre de direction, la longueur de direction a augmenté, de sorte que l'angle δ est inférieur à l'angle γ. La rotation d'angle γ de la biellette de support 23 est transmise au levier 37 par l'intermédiaire des tiges menante et menée 29 et 33, lequel levier fait pivoter le bras de pivot de fusée 45 et donc la roue 51 d'un angle de braquage β par l'intermédiaire de la biellette de liaison 41. De même, la rotation d'angle δ de la biellette de support 24 est transmise au levier 38 par l'intermédiaire des tiges menante et menée 30 et 34, lequel levier fait pivoter le bras de pivot de fusée 46 et donc la roue 52 d'un angle de braquage α par l'intermédiaire de la biellette de liaison 42. A noter que l'angle β est égal à l'angle γ (respectivement l'angle α est égal à l'angle δ) dans le cas particulier où la biellette de support 23 (respectivement 24), le levier 37 (respectivement 38) et le bras de pivot de fusée 45 (respectivement 46) sont tous de même longueur. Les angles de braquage β et α devant vérifier les conditions d'un virage sans glissement, pour chaque couple d'angles (α, β) (c'est-à-dire pour chaque angle β), il n'existe qu'une seule position possible pour le galet sur la plaque de correction 5. C'est ainsi qu'est tracée la courbe que suit la glissière de correction 6.

Ces deux précédents exemples illustrent bien à quel point la forme de cette courbe dépend des timoneries choisies : dans le premier mode de réalisation illustré aux figures 1 à 4, la glissière de correction 106 s'éloigne de la barre de direction 101 de part et d'autre d'un point central correspondant à la position du galet lorsque les roues sont droites ; à l'inverse, dans le mode de réalisation illustré aux figures 5 à 7, la glissière de correction 6 se rapproche de la barre de direction 1 de part et d'autre d'un point central correspondant à la position du galet lorsque les roues sont droites.

Dans ces deux modes de réalisation, la courbe que suit la glissière de correction 106, 6 est symétrique par rapport à un plan médian de la plaque de correction 105, 5 (lequel plan coïncide avec le plan longitudinal du châssis contenant la coulisse 121, 21 lorsque les roues sont droites -voir figures 1 et 5-). Cette symétrie résulte du fait que la plaque de correction est centrée par rapport à la barre de direction et que les bras de correction présentent une longueur identique. Une courbe non symétrique peut être obtenue si, par exemple, la plaque de correction est décalée vers une extrémité de la barre de direction.

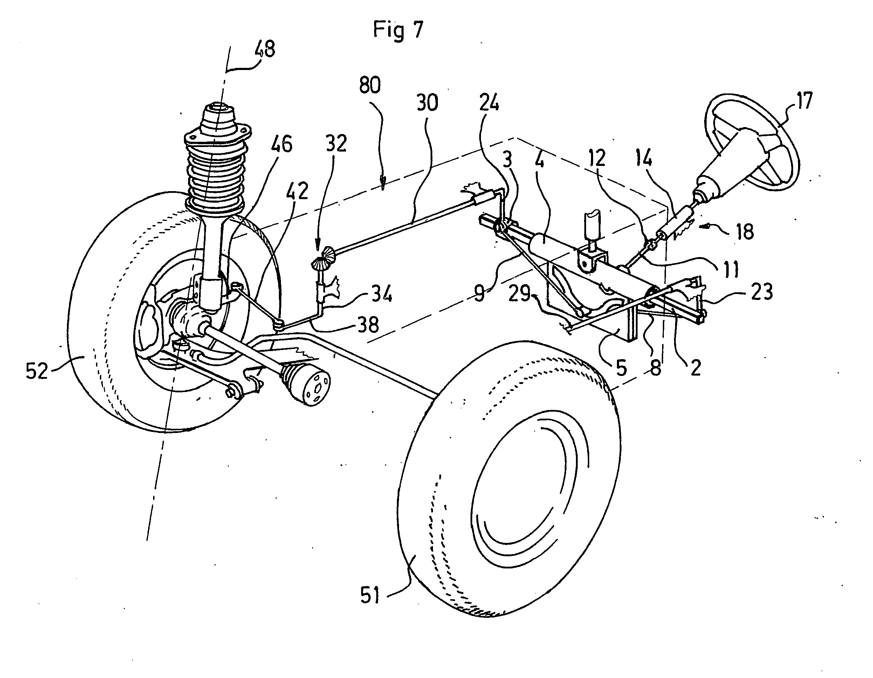

La forme de la courbe que suit la glissière de correction est donc déterminée par le choix d'une timonerie, par l'emplacement du boîtier de direction par rapport à la barre de direction, par l'agencement des bras de correction, etc., qui sont eux même déterminés par l'emplacement et le volume disponible au sein du véhicule pour loger la direction, compte tenu de l'agencement des autres organes du véhicule, symbolisés par le bloc 80 à la figure 7 (en lignes pointillées), tels que le moteur, la boîte de vitesse...

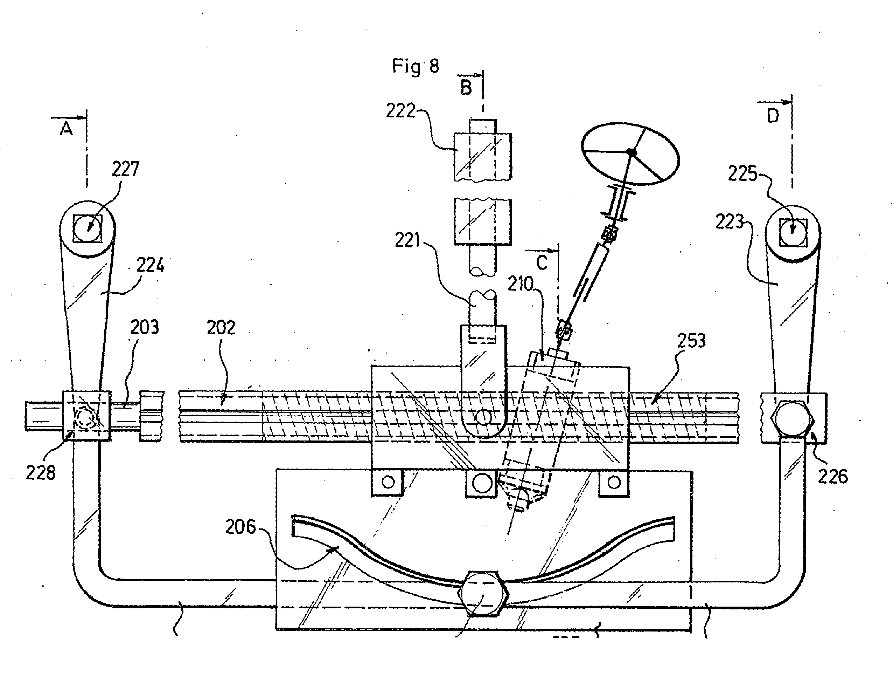

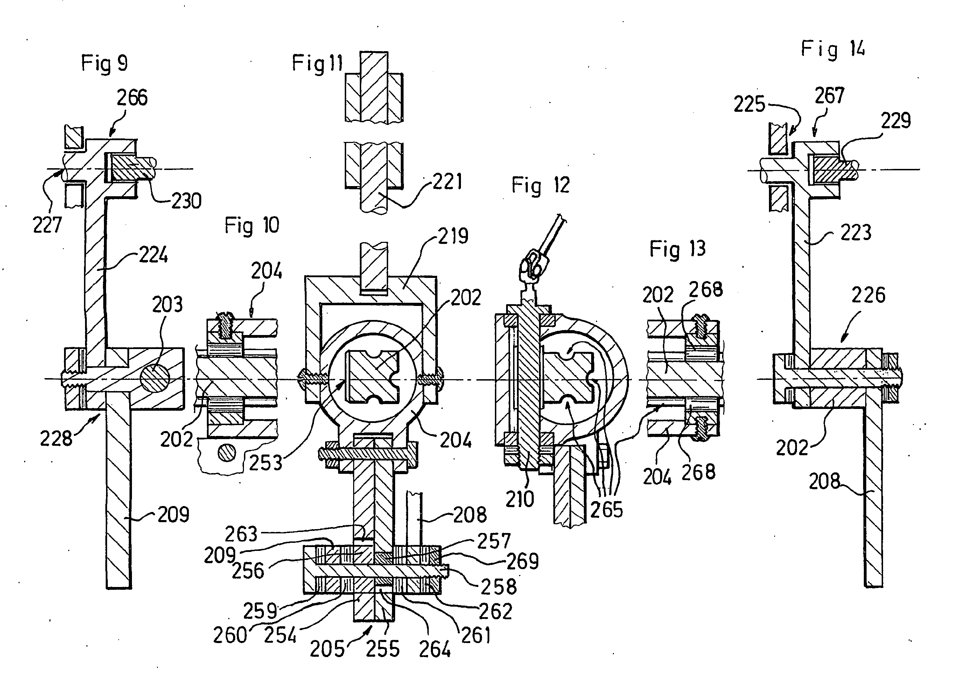

Les figures 8 à 14 illustrent une partie d'un autre mode de réalisation de la deuxième version de l'invention, proche du mode de réalisation des figures 5 à 7. Dans ce mode de réalisation, l'élément directeur 202 est formé par une barre dont une portion au moins est évidée pour pouvoir recevoir l'élément dirigé 203 en forme de tige de section circulaire. L'élément directeur 202 présente une section globalement carrée, dont un côté dentelé forme la crémaillère 253 (sur laquelle engrène le pignon 210) et dont les trois autres côtés présentent des rainures longitudinales 265 fraisées, adaptées pour recevoir chacune un rondin 268 de centrage et de glissement de l'élément directeur 202 dans le boîtier de crémaillère 204 (voir figures 12 et 13).

Le boîtier de crémaillère comprend une portion globalement cylindrique de section circulaire, traversée par l'élément directeur 202, et une plaque de correction 205, fixée par trois vis à une extension inférieure de la portion cylindrique. Les moyens de montage du boîtier au sein du véhicule (étrier 219, coulisse 221 et pallier 222) sont identiques à ceux précédemment décrits. La plaque de correction 205 du boîtier de crémaillère est composée de deux panneaux 254 et 255 superposés, de mêmes dimensions. Le panneau 254 présente une fente traversante 263 ; le panneau 255 présente une fente traversante 264, de largeur inférieure à la fente 263. Les deux fentes, qui s'étendent en regard l'une de l'autre, forment la glissière de correction 206. La fente 263 accueille un disque 256 de diamètre inférieur à la largeur de ladite fente, de sorte qu'un jeu est laissé entre le disque 256 et la plaque 254 le long du bord supérieur de la fente 263 (c'est-à-dire le long de l'un des bords longitudinaux de la glissière de correction). La fente 264 accueille un disque 257 de diamètre inférieur à la largeur de ladite fente, de sorte qu'un jeu est laissé entre le disque 257 et la plaque 255 le long du bord inférieur de la fente 264 (c'est-à-dire le long de l'autre bord longitudinal de la glissière de correction). Les disques 256 et 257 forment le galet 207. Ils sont fixés ensemble au moyen d'une vis 258 et d'un écrou 269. Ladite vis 258 sert également d'articulation des bras de correction 208 et 209 sur le galet 207. Des rondelles de glissement 259 et 260 sont interposées entre l'extrémité du bras 209 et, respectivement, la tête de la vis 258 et le disque 256, pour permettre le pivotement du bras 209 autour de ladite vis. De même, des rondelles de glissement 261 et 262 sont interposées entre l'extrémité du bras 208 et, respectivement, le disque 257 et l'écrou 269, pour permettre le pivotement du bras 208 autour de la vis 258.

La figure 9 illustre des exemples de réalisation de :

- la liaison pivot 227 permettant d'articuler la biellette de support 224 au tablier ou au châssis,
- la liaison pivot 228 permettant d'articuler à la fois la biellette de support 224 et le bras de correction 209 à l'élément dirigé 203,
- l'accouplement rigide 266 permettant de solidariser en rotation la biellette de support 224 et la tige menante 230 (dont l'extrémité amont est de section carrée).

De façon similaire, la figure 14 illustre des exemples de réalisation de :

- la liaison pivot 225 permettant d'articuler la biellette de support 223 au tablier ou au châssis,
- la liaison pivot 226 permettant d'articuler à la fois la biellette de support 223 et le bras de correction 208 à l'élément directeur 202,
- l'accouplement rigide 267 permettant de solidariser en rotation la biellette de support 223 et la tige menante 229 (dont l'extrémité amont est de section carrée).

Dans le mode de réalisation illustré aux figures 8 et 9, les bras de correction 208 et 209 sont coudés, pour éviter leur contact avec la portion cylindrique du boîtier de crémaillère lors des déplacements de la crémaillère et autoriser ainsi des angles de braquage importants.

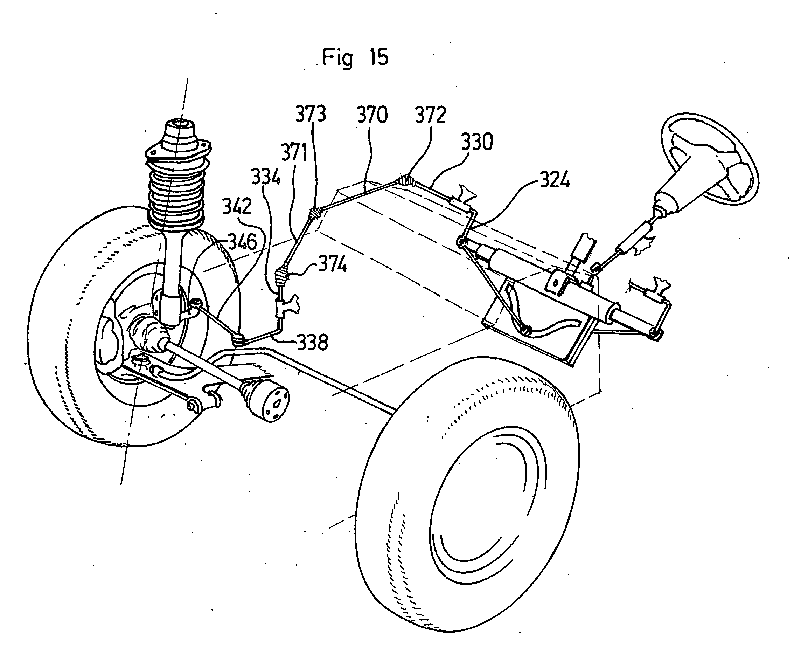

La figure 15 illustre un autre mode de réalisation des première et deuxième timoneries selon la deuxième version de l'invention. A l'instar du mode de réalisation illustré aux figures 5 à 7, la deuxième timonerie comprend une biellette de support 324, une tige menante 330 orthogonale à ladite biellette de support, une tige menée 334, un levier 338 orthogonal à ladite tige menée, et une biellette de liaison 342. Les articulations et accouplements associés à ces éléments sont les mêmes que ceux décrits en référence à la figure 7. En revanche, en lieu et place du renvoi d'angle 32 accouplant directement la tige menante 30 et la tige menée 34 dans le mode de réalisation de la figure 7, le mode de réalisation de la figure 15 comprend :

- une première tige intermédiaire 370, dont l'extrémité amont est accouplée à l'extrémité aval de la tige menante 330 par un renvoi d'angle 372,
- une deuxième tige intermédiaire 371, dont l'extrémité amont est accouplée à l'extrémité aval de la première tige intermédiaire 370 par un renvoi d'angle 373, et dont l'extrémité aval est accouplée à l'extrémité amont de la tige menée 334 par un renvoi d'angle 374.

La première timonerie, reliant l'élément directeur à l'autre bras de pivot de fusée (non visible sur la figure) est identique à cette deuxième timonerie. Les renvois d'angles 372, 373 et 374 sont de préférence homocinétiques, tels des joints de cardan ou des couples coniques.

Ce mode de réalisation permet de comprendre, d'une part que le plan de direction peut être incliné par rapport à l'horizontale, et d'autre part que les timoneries selon l'invention peuvent être adaptées à volonté à la géométrie du véhicule et à l'agencement dans le bloc avant des autres organes (notamment le moteur) du véhicule. Chaque timonerie est conçue de façon à contourner les organes interposés entre l'élément de la barre de direction auquel elle est associée et le bras de pivot de fusée correspondant. La ou les tiges intermédiaires de chaque timonerie peuvent permettre de contourner un obstacle non seulement dans un plan longitudinal du véhicule (tel que cela est illustré à la figure 15), mais aussi dans un plan transversal du véhicule : une partie de la timonerie est ainsi déportée latéralement par rapport à l'extrémité de la barre de direction à laquelle la timonerie est associée. Et il n'est pas exclu de prévoir des première et deuxième timoneries différentes l'une de l'autre (notamment dans le nombre de tiges intermédiaires).

Dans l'ensemble des modes de réalisation illustrés aux figures 1 à 15, les bras de correction s'étendent de part et d'autre de la plaque de correction. Il est possible, en variante, d'agencer les deux bras de correction d'un même côté de la plaque de correction. Dans cette variante, la glissière de correction peut être formée d'une fente non traversante, c'est-à-dire d'une rainure ménagée d'un seul côté de la plaque de correction.

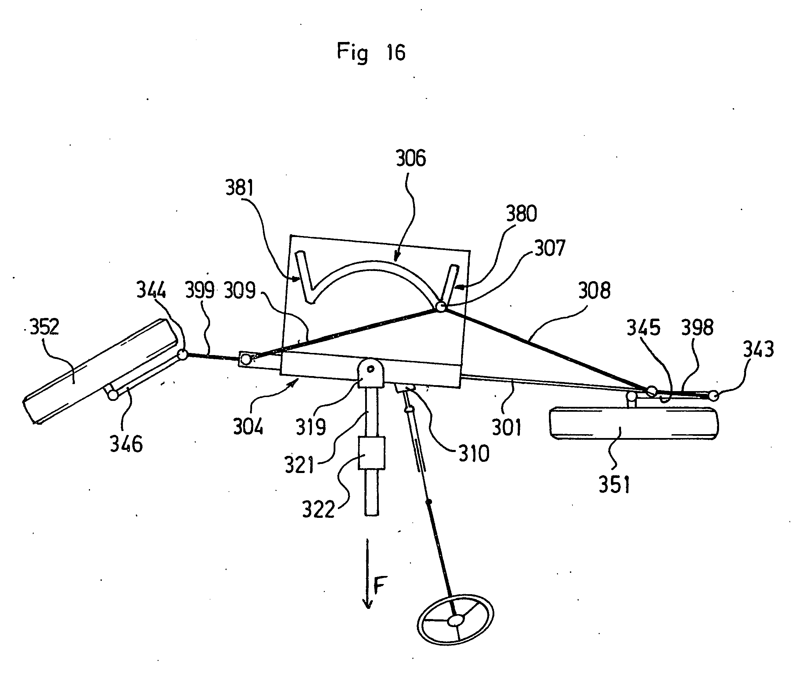

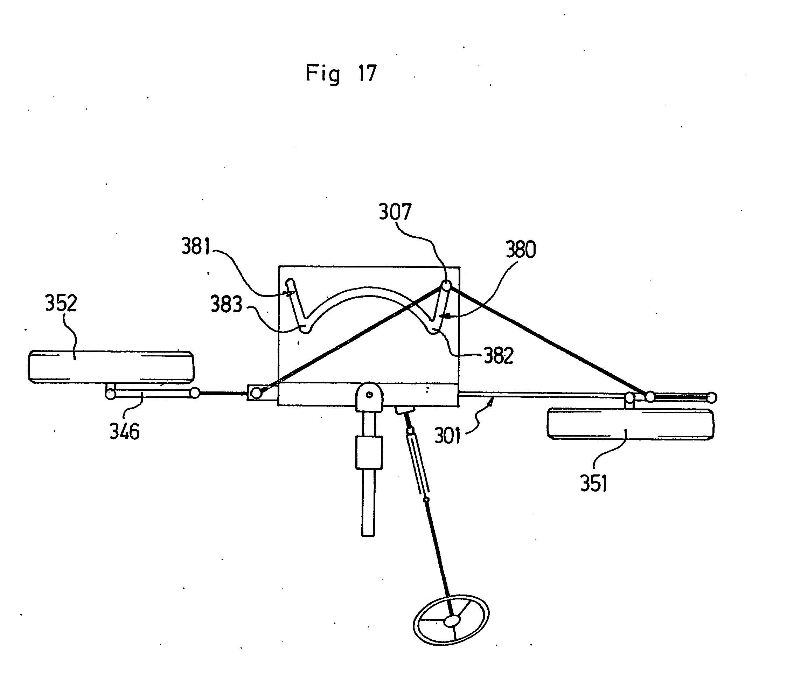

Les figures 16 et 17 représentent un autre mode de réalisation de la première version de l'invention. A l'instar du mode de réalisation illustré aux figures 1 à 4, la direction comprend une barre de direction 301 comprenant un élément directeur et un élément dirigé, deux leviers d'accouplement 398 et 399 reliant respectivement l'élément directeur au bras de pivot de fusée 345 et l'élément dirigé au bras de pivot de fusée 346, un boîtier de crémaillère 304 doté d'une plaque présentant une glissière de correction 306, deux bras de correction 308 et 309 reliant un galet 307 (apte à se déplacer dans la glissière de correction) respectivement à l'élément directeur et à l'élément dirigé, des moyens de montage 319, 321, 322 du boîtier de crémaillère au sein du châssis. A noter que, contrairement au mode de réalisation illustré aux figures 1 à 4, le boîtier de crémaillère (et notamment sa plaque de correction) s'étend à l'avant de l'essieu avant, le pignon 310 s'étend en dessous de la crémaillère, et la courbe suivie par la glissière de correction se rapproche de la barre de direction de part et d'autre d'un point central correspondant à la position du galet 307 lorsque les roues sont droites.

Par ailleurs, pour permettre un braquage simultané à 90° des deux roues avant directrices, la glissière de correction est prolongée à chacune de ses extrémités par deux glissières 380 et 381, dites glissières de braquage à 90. La direction est munie de moyens de déplacement du boîtier (non représentés), qui permettent de déplacer le boîtier de crémaillère vers l'arrière, selon une direction F sensiblement longitudinale, lorsque le galet est à la jonction entre la glissière de correction et l'une des glissières de braquage à 90°, c'est-à-dire lorsque les roues sont en position de virage sans glissement à 90°.

Sur la figure 16, les roues avant sont en position de virage à droite sans glissement à 90° : la roue 351 droite est braquée à 90°, tandis que la roue gauche 352 est braquée d'un angle inférieur ; le galet 307 est à l'extrémité droite de la glissière de correction 306, au point de jonction entre cette glissière de correction et la glissière 380 de braquage à 90°. L'actionnement des moyens de déplacement du boîtier entraîne un déplacement du boîtier vers l'essieu avant (c'est-à-dire vers l'arrière du véhicule), un déplacement subséquent du galet 307 dans la glissière 380 de braquage à 90°, et par conséquent une rotation du bras de pivot de fusée 346. La glissière 380 de braquage à 90° suit une courbe qui a été tracée point par point de telle sorte que, au cours du déplacement du boîtier : la roue 351 (roue intérieure au virage), qui est en butée, reste dans sa position initiale, braquée à 90° ; le galet 307 décrit un arc de cercle centré autour de l'articulation 343 ; la roue 352 (roue extérieure au virage) pivote autour de son axe de pivot de fusée entre un angle de braquage correspondant au virage sans glissement à 90° (figure 16) et un angle sensiblement égal à 90° (figure 17). A noter que ce faisant, la longueur de direction varie.

De même, la glissière de glissement 381 suit une courbe qui a été tracée point par point de telle sorte que, lorsque les roues sont dans une position de virage à gauche sans glissement à 90° et que les moyens de déplacement du boîtier sont actionnés, la roue droite pivote autour de son axe de pivot de fusée jusqu'à former un angle de 90° avec la direction longitudinale du véhicule, la roue gauche restant immobile, braquée à 90°.

A l'instar de la glissière de correction, la courbe suivie par chaque glissière de braquage à 90° dépend de la position du boîtier de crémaillère au sein du véhicule, des timoneries choisies, etc., ainsi que de la direction de déplacement du boîtier (c'est-à-dire des moyens de déplacement de boîtier choisis).

Il est à noter qu'il existe une zone de non guidage du galet 307 à chacune des deux jonctions entre la glissière de correction 306 et les glissières 380, 381 de braquage à 90°. Pour en limiter l'impact, il est particulièrement avantageux d'utiliser une plaque de correction comprenant deux panneaux superposés percés de fentes de largeurs différentes, et un galet comprenant deux disques de diamètres différents, portés par un même axe, tels que la plaque de correction et le galet décrits en référence à la figure 11. En effet, dans ce cas, la zone de non guidage du galet correspond finalement à la zone, restreinte, de non guidage du disque de plus petit diamètre.

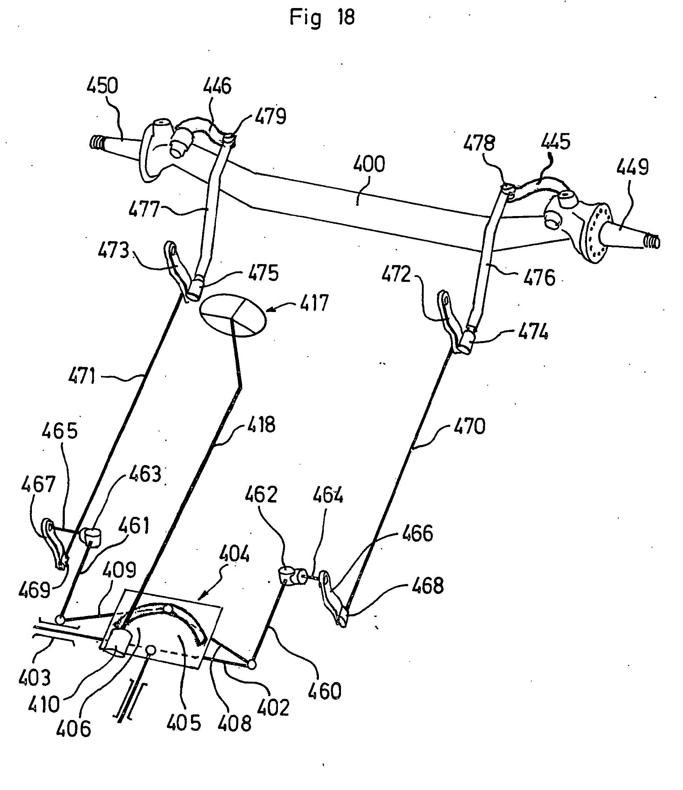

La figure 18 illustre une troisième version de l'invention, particulièrement adaptée aux véhicules lourds à essieu rigide. La direction correspondante peut être montée dans un véhicule existant moyennant de légers aménagements du véhicule. Un véhicule lourd comprend usuellement un volant 417, un essieu rigide 400 reliant les fusées 449 et 450 des roues avant directrices, ainsi que deux leviers d'attaque 445 et 446, dont l'un au moins est associé à une bielle de direction 477 et à une bielle pendante 473. Ces éléments sont conservés dans la direction selon l'invention, les leviers de commande 445 et 446 faisant office de bras de pivot de fusée selon l'invention. En revanche, la barre d'accouplement, les bras de pivot de fusée initiaux et le boîtier de direction à vis du véhicule existant sont supprimés.

Les bielles pendantes 473 et 472 sont montées pivotantes autour d'un même axe transversal fixe par rapport au châssis, par leur extrémité supérieure dite extrémité de rotation. La bielle pendante 472 (respectivement 473) présente une extrémité, dite extrémité de commande, opposée à son extrémité de rotation et librement articulée par une liaison rotule 474 (respectivement 475) sur une extrémité amont de la bielle de direction 476 (respectivement 477). L'extrémité opposée de la bielle de direction 476 (respectivement 477) est librement articulée sur l'extrémité d'actionnement du bras de pivot de fusée 445 (respectivement 446) par une liaison rotule 478 (respectivement 479). Les bielles de direction 476 et 477 s'étendent selon des directions sensiblement longitudinales lorsque les roues sont droites. A noter que les bras de pivot de fusée 445 et 446 s'étendent globalement sensiblement orthogonalement aux roues, contrairement aux modes de réalisation précédemment décrits.

La direction selon l'invention comprend de plus une colonne de direction 418 télescopique, une barre de direction déportée comportant un élément directeur 402 à crémaillère et un élément dirigé 403, un boîtier de crémaillère 404 doté d'une plaque de correction présentant une glissière de correction 406, un pignon 410 entraîné en rotation par la colonne de direction et qui engrène sur la crémaillère, des bras de correction 408 et 409, et des moyens de montage du boîtier de crémaillère au sein du châssis tels que ceux précédemment décrits, définissant en l'exemple un plan de direction horizontal. La barre de direction et le boîtier de crémaillère sont logés dans une partie postérieure du véhicule, et notamment à l'arrière du volant 417 (contrairement aux modes de réalisation précédemment décrits). Cet exemple illustre bien la flexibilité offerte par l'invention pour le choix de l'emplacement de la direction : il en effet possible de loger la barre de direction et le boîtier de crémaillère en dehors du bloc avant du véhicule, et ce quel que soit le type de véhicule (ainsi, dans le cas d'un véhicule léger, la direction peut être logée dans une portion inférieure du coffre arrière du véhicule), sous réserve d'adapter la timonerie et la colonne de direction.

La direction comprend par ailleurs une première (respectivement une deuxième) timonerie comprenant :

- une biellette de support 460 (461), qui s'étend dans un plan horizontal (plan de direction), et qui présente une extrémité articulée à l'élément directeur 402 (à l'élément dirigé 403) par une liaison pivot et une extrémité opposée, dite extrémité de rotation, articulée au châssis par une liaison pivot,
- une première tige 464 (465) s'étendant sensiblement selon une direction transversale fixe par rapport châssis, et dont une extrémité amont est accouplée à l'extrémité de rotation de la biellette de support 460 (461) au moyen d'un accouplement 462 (463) (par exemple un couple de pignons coniques) adapté pour transformer un pivotement de la biellette de support en une rotation axiale de la première tige, ladite première tige étant guidée en rotation axiale au moyen d'un palier fixe par rapport au châssis,

- une bielle pendante primaire 466 (467), qui s'étend sensiblement dans un plan vertical longitudinal du châssis, et dont une extrémité amont est accouplée à l'extrémité aval de la première tige 464 (465) au moyen d'un accouplement rigide,

- une deuxième tige 470 (471), qui s'étend sensiblement horizontalement dans un plan vertical longitudinal du châssis, et dont une extrémité amont est articulée sur l'extrémité aval de la bielle pendante primaire 466 (467) au moyen d'une liaison 468 (469) pivot ou rotule, et dont l'extrémité aval est articulée sur l'extrémité de commande de la bielle pendante 472 (473) dite bielle pendante secondaire, au moyen d'une liaison pivot ou rotule,

- ladite bielle pendante secondaire 472 (473), la bielle de direction 476 (477) et les articulations associées.

Il est à noter que la position relative de la crémaillère et du pignon (crémaillère formée sur une face inférieure de l'élément directeur et pignon agencé en dessous de la crémaillère, ou crémaillère formée sur une face supérieure de l'élément directeur et pignon agencé au dessus de la crémaillère) détermine le sens de déplacement de la crémaillère, et donc le sens de rotation des roues, pour un sens de rotation donné du pignon. Il peut être avantageux de choisir (par exemple pour des raisons d'encombrement et d'emplacement disponible) la position relative de la crémaillère et du pignon. Une fois ce choix effectué, si le sens de rotation des roues ne correspond pas au sens de rotation du volant, il suffit d'intercaler un couple de pignons entre deux éléments de la colonne de direction ou entre la colonne de direction et l'arbre de volant ou le pignon, pour rétablir la cohérence entre le sens de rotation du volant et le sens de rotation des roues.

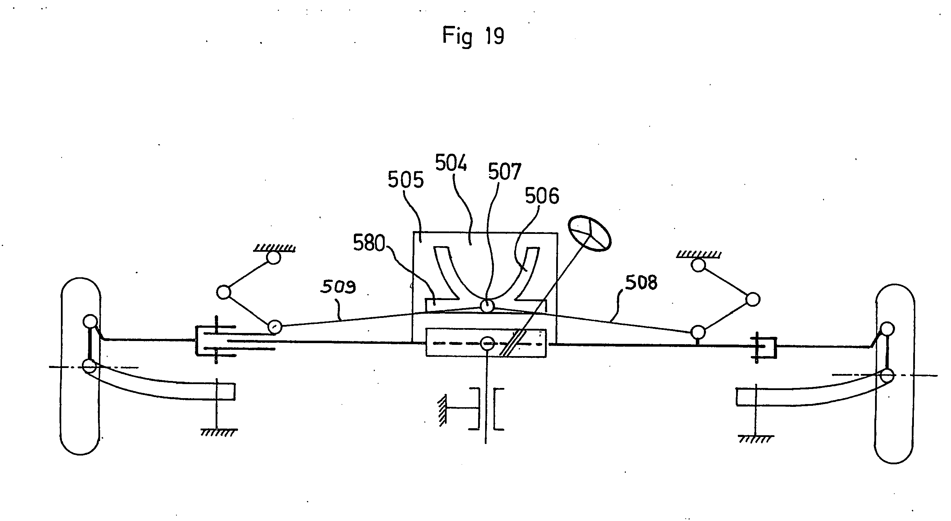

La figure 19 illustre un perfectionnement du mode de réalisation illustré aux figures 1 à 4, dans lequel le boîtier de crémaillère 504 comprend une plaque de correction 505 qui présente, outre une glissière de correction 506 recevant un galet 507, une seconde glissière 580 dite glissière de fonctionnement spécial, dans laquelle le galet 507 peut se déplacer. Cette glissière de fonctionnement spécial 580 s'étend sensiblement parallèlement à la barre de direction, de sorte que le triangle formé par la barre de direction 501 et les bras de correction 508 et 509 ne se déforme pas lors d'un déplacement du galet dans la glissière 580. La longueur de direction est donc constante lorsque le galet se déplace dans la glissière 580 ; la différence entre les angles de braquage des deux roues reste donc la même au cours d'un déplacement du galet dans cette glissière 580. En l'exemple, la glissière est formée de telle que sorte que cette différence soit nulle et que les roues soient donc constamment parallèles. Il en résulte que la glissière de correction 506 et la glissière de fonctionnement spécial 580 se rejoignent pour se confondre en une zone d'aiguillage correspondant à une position du galet dans laquelle les roues sont droites. Les deux glissières s'éloignent l'une de l'autre de part et d'autre de cette zone d'aiguillage. La direction comprend par ailleurs des moyens d'aiguillage (non représentés) permettant de choisir la glissière (506 ou 580) que doit suivre le galet 507, et des moyens de commande des moyens d'aiguillage, qui peuvent être actionnés par le conducteur du véhicule.

Ces moyens d'aiguillage définissent donc deux modes de fonctionnement du véhicule : un mode de fonctionnement normal dans lequel le galet se déplace dans la glissière de correction 506 et le véhicule vire sans glissement des roues, et un mode de fonctionnement spécial dans lequel le galet se déplace dans la glissière de fonctionnement spécial 580 et les roues du véhicule sont constamment parallèles. Ce mode de fonctionnement spécial peut être utilisé pour faciliter certaines manoeuvres du véhicule à très faible vitesse, notamment si le véhicule est doté de roues arrière directrices ; il permet alors de garer le véhicule dans les endroits les plus exigus. Un tel véhicule trouvera toute son utilité dans certaines professions : pompiers, police, livraison, travaux publics, équipement... Le mode de fonctionnement spécial peut également être utilisé pour augmenter le glissement des roues du véhicule lors d'un virage à vitesse plus importante, et produire ainsi un effet spectaculaire. Une telle utilisation est destinée à l'industrie du cinéma.

Il va de soi que l'invention peut faire l'objet de nombreuses variantes par rapport aux modes de réalisation décrits et illustrés.

En particulier, quelle que soit la version de l'invention, la plaque de correction peut comprendre des glissières de braquages à 90° et/ou une glissière de fonctionnement spécial.

**Revendications**

1. Véhicule automobile comprenant :

- un châssis,
- des roues dont au moins deux roues directrices (151, 152 ; 51, 52) à l'avant du véhicule, chaque roue directrice étant portée par une fusée (149, 150 ; 49, 50) dont est rigidement solidaire un bras (145, 146 ; 45, 46) dit bras de pivot de fusée, ladite fusée et ledit bras de pivot de fusée étant montés rotatifs autour d'un axe (147, 148 ; 47, 48) dit axe de pivot de fusée, le bras de pivot de fusée présentant une extrémité solidaire de la fusée et une extrémité opposée (159, 160) dite extrémité d'actionnement,
- une direction comprenant :

■ une colonne de direction (118 ; 18) commandée, en rotation axiale, par un volant de direction (117 ; 17) pouvant être actionné par un conducteur du véhicule,

■ un pignon (110 ; 10) entraîné en rotation par la colonne de direction,

■ une crémaillère (153) sur laquelle engrène le pignon,

■ un boîtier de crémaillère (104 ; 4) recevant ledit pignon et ladite crémaillère,

**caractérisé en ce que** :

- la direction comprend un ensemble formant barre (101 ; 1), dit barre de direction, ladite barre de direction comprenant au moins deux éléments (102, 103 ; 2, 3 ; 402, 403) coaxiaux montés coulissants l'un par rapport à l'autre selon une direction axiale de ladite barre de direction, l'un (102 ; 2 ; 402) des éléments étant dit élément directeur, l'autre élément (103 ; 3 ; 403) étant dit élément dirigé,

- l'élément directeur (102 ; 2 ; 402) traverse le boîtier de crémaillère et porte la crémaillère, de telle sorte qu'une rotation du pignon (110 ; 10) entraîne une translation de l'élément directeur selon la direction axiale de la barre de direction,

- le boîtier de crémaillère comprend une plaque (105 ; 5 ; 405 ; 505), dite plaque de correction, comprenant une fente formant glissière (106 ; 6), dite glissière de correction, recevant un galet (107 ; 7 ; 507) adapté pour se déplacer le long de ladite glissière de correction,

- la direction comprend deux bras (108, 109 ; 8, 9), dits bras de correction, l'un (108 ; 8) desdits bras de correction étant monté articulé, à une extrémité, au galet et, à l'autre extrémité, à l'élément directeur, l'autre bras de correction (109 ; 9) étant monté articulé, à une extrémité, au galet, et, à l'autre extrémité, à l'élément dirigé, de telle sorte que la barre de direction (101 ; 1) et les deux bras de correction forment un triangle déformable selon la position du galet dans la glissière de correction (106 ; 6),

- la direction comprend des moyens (119, 120, 121, 122 ; 19, 20, 21, 22) de montage du boîtier de crémaillère au sein du véhicule, adaptés pour autoriser un pivotement du boîtier de crémaillère (104 ; 4) dans un plan (D) dit plan de direction, autour d'un axe (165) dudit boîtier dit axe d'attache, les moyens de montage étant de plus adaptés pour interdire tout déplacement de l'axe d'attache selon une direction transversale du châssis et pour autoriser un déplacement dudit axe d'attache selon une direction contenue dans le plan de direction et dans un plan longitudinal du châssis,

- la colonne de direction (118 ; 18) est adaptée pour absorber tout déplacement du boîtier de crémaillère (104 ; 4),

- la direction comprend une première timonerie (198 ; 23, 29, 33, 37, 41) reliant l'élément directeur (102 ; 2 ; 402) à l'extrémité d'actionnement de l'un (145 ; 45), premier, des bras de pivot de fusée, et une deuxième timonerie (199 ; 24, 30, 34, 38, 42) reliant l'élément dirigé (103 ; 3 ; 403) à l'extrémité d'actionnement du deuxième bras de pivot de fusée,

- la glissière de correction (106 ; 6) suit une courbe adaptée, selon les première et deuxième timoneries, pour que les fusées des roues du véhicule s'étendent selon des directions qui se coupent, à chaque instant, en un même point.

**2.** Véhicule selon la revendication 1, **caractérisé en ce que** la colonne de direction (18) comprend au moins deux parties coaxiales (13, 14) montées coulissantes l'une par rapport à l'autre selon une direction axiale de la colonne de direction, dont une partie accouplée à l'axe du volant et une partie accouplée au pignon.

**3.** Véhicule selon l'une des revendications 1 ou 2, **caractérisé en ce que** :

- la barre de direction (101) s'étend à proximité de l'essieu avant,

- la première timonerie comprend un premier levier d'accouplement (198), articulé respectivement sur une extrémité de l'élément directeur et sur l'extrémité d'actionnement du premier bras de pivot de fusée,

- la deuxième timonerie comprend un deuxième levier d'accouplement (199), articulé respectivement sur une extrémité de l'élément dirigé et sur l'extrémité d'actionnement du deuxième bras de pivot de fusée.

**4.** Véhicule selon la revendication 3, **caractérisé en ce que** la direction comprend au moins un compas de niveau (192, 193) reliant l'un des éléments (102, 103) de la barre de direction au châssis.

**5.** Véhicule selon l'une des revendications 1 ou 2, **caractérisé en ce que** :

- le véhicule est dépourvu de barre d'accouplement,

- la première timonerie comprend une biellette (23) dite biellette de support, qui s'étend dans un plan sensiblement parallèle au plan de direction et qui porte l'élément directeur (2), ladite biellette de support étant montée pivotante, à une extrémité dite extrémité de rotation, autour d'un axe fixe par rapport au châssis et étant articulée, à l'autre extrémité, sur l'élément directeur,

- la deuxième timonerie comprend une biellette (24 ; 324) dite biellette de support, qui s'étend dans un plan sensiblement parallèle au plan de direction et qui porte l'élément dirigé (3), ladite biellette de support étant montée pivotante, à une extrémité dite extrémité de rotation, autour d'un axe fixe par rapport au châssis et étant articulée, à l'autre extrémité, sur l'élément dirigé,
- les première et deuxième timoneries comprennent chacune au moins

■ une tige (29, 30 ; 330), dite tige menante, qui s'étend orthogonalement à la biellette de support (23, 24 ; 324), laquelle tige présente une extrémité, dite extrémité amont, accouplée à l'extrémité de rotation de la biellette de support par l'intermédiaire d'un accouplement (25, 27) adapté pour transformer un pivotement de la biellette de support en une rotation axiale de la tige menante, l'extrémité opposée de la tige menante étant dite extrémité aval,
■ une tige (33, 34 ; 334), dite tige menée, qui présente une extrémité, dite extrémité amont, reliée à la tige menante par l'intermédiaire d'organes (31, 32 ; 372, 370, 373, 371 374), dits organes intermédiaires, adaptés pour transformer une rotation axiale de la tige menante en une rotation axiale de la tige menée, ladite tige menée présentant une extrémité opposée dite extrémité aval,
■ un levier (37, 38 ; 338) non parallèle à la tige menée, lequel levier présente une extrémité, dite extrémité amont du levier, accouplée à l'extrémité aval de la tige menée par l'intermédiaire d'un accouplement (35, 36) adapté pour transformer une rotation axiale de la tige menée en une rotation du levier autour de l'axe de ladite tige menée, l'extrémité opposée du levier étant dite extrémité aval du levier,
■ une biellette (41, 42 ; 342) dite biellette de liaison, librement articulée, à une extrémité, sur l'extrémité aval du levier (37, 38 ; 338) et, à l'autre extrémité, sur l'extrémité d'actionnement du bras de pivot de fusée (45, 46 ; 346).

6. Véhicule selon la revendication 5, **caractérisé en ce que** lesdits organes intermédiaires comprennent un renvoi d'angle (31, 32) accouplant directement l'extrémité aval de la tige menante et l'extrémité amont de la tige menée.

7. Véhicule selon la revendication 5, **caractérisé en ce que** lesdits organes intermédiaires comprennent une tige, dite tige intermédiaire, non parallèle aux tiges menante et menée, ladite tige intermédiaire étant accouplée, à une extrémité, à l'extrémité aval de la tige menante par l'intermédiaire d'un renvoi d'angle adapté pour transformer une rotation axiale de la tige menante en une rotation axiale de la tige intermédiaire, ladite tige intermédiaire étant accouplée, à l'autre extrémité, à l'extrémité amont de la tige menée par l'intermédiaire d'un renvoi d'angle adapté pour transformer une rotation axiale de la tige intermédiaire en une rotation axiale de la tige menée.

8. Véhicule selon la revendication 5, **caractérisé en ce que** lesdits organes intermédiaires comprennent une succession de plusieurs tiges intermédiaires (370, 371) reliées entre elles et aux tiges menante et menée par des renvois d'angle (372, 373, 374).

9. Véhicule selon l'une des revendications 6 à 8, **caractérisé en ce que** les renvois d'angle (31, 32 ; 372, 373, 374) sont des renvois homocinétiques.

10. Véhicule selon l'une des revendications 1 à 9, **caractérisé en ce que** chaque bras de pivot de fusée (145, 146 ; 45, 46) s'étend sensiblement parallèlement au plan de la roue à laquelle il est associé.

11. Véhicule selon l'une des revendications 1 ou 2, **caractérisé en ce que** :

- le véhicule est dépourvu de barre d'accouplement,
- la première timonerie comprend une biellette (460), dite biellette de support, qui s'étend dans un plan sensiblement parallèle au plan de direction et qui porte l'élément directeur (402), ladite biellette de support étant montée pivotante, à une extrémité dite extrémité de rotation, autour d'un axe fixe par rapport au châssis et étant articulée, à l'autre extrémité, sur l'élément directeur,
- la deuxième timonerie comprend une biellette (461), dite biellette de support, qui s'étend dans un plan sensiblement parallèle au plan de direction et qui porte l'élément dirigé (403) de la barre de direction, ladite biellette de support étant montée pivotante, à une extrémité dite extrémité de rotation, autour d'un axe fixe par rapport au châssis et étant articulée, à l'autre extrémité, sur l'élément dirigé,
- les première et deuxième timoneries comprennent chacune également au moins

■ une première tige (464, 465) qui s'étend selon une direction sensiblement transversale fixe par rapport au châssis, et qui présente une extrémité, dite extrémité amont, accouplée à l'extrémité de rotation de la biellette de support par l'intermédiaire d'un accouplement (462, 463) adapté pour transformer un pivotement de la biellette de support en une rotation axiale de la première tige, ladite première tige étant guidée en rotation axiale au sein du véhicule au moyen d'au moins un palier fixe par rapport au châssis, l'extrémité opposée de la première tige étant dite extrémité aval,

■ une bielle pendante (466, 467) dite bielle pendante primaire, non parallèle à la première tige, laquelle bielle pendante primaire présente une extrémité, dite extrémité amont, accouplée à l'extrémité aval de la première tige par l'intermédiaire d'un accouplement adapté pour transformer une rotation axiale de la première tige en une rotation de la bielle pendante primaire autour de l'axe de la première tige, l'extrémité opposée de ladite bielle pendante primaire étant dite extrémité aval,

■ une deuxième tige (470, 471) qui s'étend selon une direction sensiblement longitudinale fixe par rapport au châssis, et qui présente une extrémité, dite extrémité amont, articulée à l'extrémité aval de la bielle pendante primaire, et une extrémité opposée dite extrémité aval,

■ une bielle pendante (472, 473) dite bielle pendante secondaire, montée pivotante, à une extrémité dite extrémité de rotation, autour d'un axe s'étendant selon une direction sensiblement transversale fixe par rapport au châssis, ladite bielle pendante secondaire présentant une extrémité opposée, dite extrémité de commande, sur laquelle est articulée l'extrémité aval de la deuxième tige,

■ une bielle (476, 477) dite bielle de direction, librement articulée, à une extrémité dite extrémité amont, sur l'extrémité de commande de la bielle pendante secondaire et, à une extrémité opposée dite extrémité aval, sur l'extrémité d'actionnement du bras de pivot de fusée.

12. Véhicule selon l'une des revendications 5 à 11, **caractérisé en ce que** le boîtier de crémaillère et la barre de direction sont agencés entre le tablier et le moteur du véhicule.

13. Véhicule selon l'une des revendications 5 à 12, **caractérisé en ce que** le boîtier de crémaillère et la barre de direction sont agencés à l'arrière du véhicule.

14. Véhicule selon l'une des revendications 1 à 13, **caractérisé en ce que** la plaque de correction (105 ; 5 ; 405) s'étend dans un plan parallèle au plan de direction (D).

15. Véhicule selon l'une des revendications 1 à 14, **caractérisé en ce que** les moyens de montage comprennent :

- un étrier (119 ; 19) formé de deux chapes en regard et d'une âme, l'étrier étant monté sur le boîtier de crémaillère de telle sorte que le boîtier puisse pivoter par rapport à l'étrier autour d'un axe (165) définissant l'axe d'attache du boîtier, les chapes de l'étrier s'étendant de part et d'autre dudit boîtier,
- une coulisse (121 ; 21) s'étendant dans un plan sensiblement parallèle au plan de direction, sensiblement orthogonalement à la barre de direction lorsque les roues sont droites, laquelle coulisse présente une extrémité fixée à l'étrier,
- un palier (121 ; 22) dans lequel la coulisse peut coulisser, ledit palier étant monté fixe par rapport au châssis.

16. Véhicule selon l'une des revendications 1 à 15, **caractérisé en ce que** l'élément directeur est une barre (2) formant coulisse et l'élément dirigé est un coulisseau (3) enfilé sur ladite coulisse.

17. Véhicule selon l'une des revendications 1 à 16, **caractérisé en ce que** l'un des éléments de la barre de direction est une tige (203) et l'autre élément est un tube (202) dans lequel ladite tige peut coulisser.

18. Véhicule selon l'une des revendications 1 à 17, **caractérisé en ce que** :

- la plaque de correction (205) est formée d'au moins deux panneaux (254, 255) superposés présentant chacun une fente (263, 264), lesdites fentes se superposant pour former la glissière de correction (206), lesdites fentes présentant des largeurs différentes,
- le galet (207) est formé d'au moins deux disques (256, 257) superposés, l'un (256), premier, desdits disques étant agencé dans la fente de l'un (254), premier, des panneaux, le deuxième disque (257) étant agencé dans la fente du deuxième panneau (255), le premier disque présentant un diamètre inférieur à la largeur de la fente du premier panneau et étant agencé de telle sorte qu'un jeu soit ménagé entre ledit disque et ladite fente le long d'un bord longitudinal de la glissière de correction, le deuxième disque présentant un diamètre inférieur à la largeur de la fente du deuxième panneau et étant agencé de telle sorte qu'un jeu soit ménagé entre ledit disque et ladite fente le long de l'autre bord longitudinal de la glissière de correction.

19. Véhicule selon l'une des revendications 1 à 18, **caractérisé en ce que** :

- la glissière de correction (306) est prolongée à chacune de ses extrémités par deux fentes formant glissières (380, 381), dites glissières de braquage à 90°,

- la direction est munie de moyens, dits moyens de déplacement du boîtier, adaptés pour, lorsqu'ils sont actionnés par le conducteur et que les roues sont en position de virage sans glissement à 90°, pouvoir déplacer le boîtier de crémaillère de façon à contraindre le galet (307) à se déplacer dans l'une ou l'autre des glissières de braquage à 90°,

- chaque glissière de braquage à 90° suit une courbe adaptée pour permettre, lorsque les moyens de déplacement du boîtier sont actionnés, une rotation de la roue extérieure au virage depuis un angle de braquage correspondant à un virage sans glissement à 90° jusqu'à un angle sensiblement égal à 90°, sans modifier l'angle de braquage de la roue intérieure au virage.

20. Véhicule selon l'une des revendications 1 à 19, **caractérisé en ce que** :

- la plaque de correction (505) comprend une seconde fente formant glissière (580), dite glissière de fonctionnement spécial, dans laquelle le galet peut se déplacer, la glissière de correction et la glissière de fonctionnement spécial étant confondues en une zone dite zone d'aiguillage,

- la direction comprend des moyens d'aiguilletage, qui déterminent un mode de fonctionnement normal dans lequel le galet (507) est guidé dans la glissière de correction (506), et un mode de fonctionnement spécial dans lequel le galet est guidé dans la glissière de fonctionnement spécial (580), la direction comprenant des moyens de commande des moyens d'aiguillage par le conducteur.

**Claims**

1. Motor vehicle comprising:

   - a chassis,
   - wheels including at least two guide wheels (151, 152; 51, 52) at the front of the vehicle, each guide wheel being borne by a stub (149, 150; 49; 50) to which an arm (145, 146; 45, 46) called a stub pivot arm is rigidly secured, said stub and said stub pivot arm being mounted for rotating around an axis (147, 148; 47, 48) called the stub pivot axis, the stub pivot arm having one end secured to the stub and an opposite end (159, 160) called the actuation end,
   - a steering system comprising:

■ a steering column (118, 18) controlled, in axial rotation, by a steering wheel (117; 17) able to be activated by a vehicle driver,
■ a pinion (110; 10) driven in rotation by the steering column,
■ a rack (153) with which the pinion engages,
■ a rack housing (104; 4) receiving said pinion and said rack,
**characterized in that**:
- the steering system comprises a unit forming a bar (101; 1), called the steering bar, said steering bar comprising at least two coaxial components (102, 103; 2, 3; 402, 403) mounted for sliding one relative to the other in an axial direction of said steering bar, one (102; 2; 402) of the components being called the steering component, the other element (103, 3; 403) being called the steered component;
- the steering component (102; 2; 402) passes through the rack housing and bears the rack, such that rotating the pinion (110; 10) causes a translation of the steering component in the axial direction of the steering bar,
- the rack housing comprises a plate (105; 5; 405; 505), called a correction plate, comprising a slot forming a slide rail (106; 6), called a correction slide rail, receiving a roller (107; 7; 507) suitable for moving along said correction slide rail,
- the steering system comprises two arms (108, 109; 8, 9), called correction arms, one (108, 8) of said correction arms being mounted articulated, at one end, on the roller and, at the other end, on the steering component, the other correction arm (109, 9) being mounted articulated, at one end, on the roller, and, at the other end, on the steered component, such that the steering bar (101; 1) and the two correction arms form a triangle that is deformable according to the position of the roller in the correction slide rail (106, 6),
- the steering system comprises means (119, 120, 121, 122; 19, 20, 21, 22) for assembling the rack housing in the vehicle, suitable for allowing the rack housing (104; 4) to pivot in a plane (D) called the steering plane, around an axis (165) of said housing called the attachment axis, the assembly means being moreover suitable for preventing any movement of the attachment axis in a transverse direction of the chassis and for allowing said attachment axis to move in a direction contained in the steering plane and in a longitudinal plane of the chassis,
- the steering column (118; 18) is suitable for absorbing any movement of the rack housing (104; 4),

- the steering system comprises a first steering gear (198; 23, 29, 33, 37, 41) connecting the steering component (102; 2; 402) to the actuation end of one (145; 45), the first one, of the stub pivot arms, and a second steering gear (199; 24, 30, 34, 38, 42) connecting the steered component (103; 3; 403) to the actuation end of the second stub pivot arm,

- the correction slide rail (106; 6) follows a suitable curve, according to the first and second steering gears, such that the vehicle wheel stubs extend in directions which intersect, at each time, at one and the same point.

2. Vehicle according to claim 1, **characterized in that** the steering column (18) comprises at least two coaxial parts (13, 14) mounted for sliding one relative to the other in an axial direction of the steering column, including one part coupled to the steering wheel axis and one part coupled to the pinion.

3. Vehicle according to one of claims 1 or 2, **characterized in that**:

    - the steering bar (101) extends in proximity to the front axle,
    - the first steering gear comprises a first coupling lever arm (198), articulated on one end of the steering component and on the actuation end of the first stub pivot arm respectively,
    - the second steering gear comprises a second coupling lever arm (199), articulated on one end of the steered component and on the actuation end of the second stub pivot arm respectively.

4. Vehicle according to claim 3, **characterized in that** the steering system comprises at least one level compass (192, 193) connecting one of the components (102, 103) of the steering bar to the chassis.

5. Vehicle according to one of claims 1 or 2, **characterized in that**:

    - the vehicle has no tie bar,
    - the first steering gear comprises a link (23), called a support link, which extends in a plane substantially parallel to the steering plane and which carries the steering component (2), said support link being mounted for pivoting, at one end called the rotation end, around an axis fixed relative to the chassis and being articulated, at the other end, on the steering component;
    - the second steering gear comprises a link (24; 324), called a support link, which extends in a plane substantially parallel to the steering plane and which carries the steered component (3), said support link being mounted for pivoting, at one end called the rotation end, around an axis fixed relative to the chassis and being articulated, at the other end, on the steered component,

- the first and second steering gears each comprise at least

    ■ a rod (29, 30; 330), called the driving rod, which extends orthogonally to the support link (23, 24; 324), said rod having an end, called the upstream end, coupled to the rotation end of the support link by means of a coupling (25, 27) suitable for converting a pivoting of the support link into an axial rotation of the driving rod, the opposite end of the driving rod being called the downstream end,

    ■ a rod (33, 34; 334), called the driven rod, which has an end, called the upstream end, connected to the driving rod by means of fittings (31, 32; 372, 370, 373, 371, 374), called intermediate fittings, suitable for converting an axial rotation of the driving rod into an axial rotation of the driven rod, said driven rod having an opposite end called the downstream end,

    ■ a lever (37, 38; 338) not parallel to the driven rod, said lever having an end, called the upstream end of the lever, coupled to the downstream end of the driven rod by means of a coupling (35, 36) suitable for converting an axial rotation of the driven rod into a rotation of the lever around the axis of said driven rod, the opposite end of the lever being called the downstream end of the lever,

    ■ a link (41, 42; 342) called a connection link, freely articulated, at one end, on the downstream end of the lever (37, 38; 338) and, at the other end, on the actuation end of the stub pivot arm (45, 46; 346).

6. Vehicle according to claim 5, **characterized in that** said intermediate fittings comprise an angle transmission (31, 32) directly coupling the downstream end of the driving rod and the upstream end of the driven rod.

7. Vehicle according to claim 5, **characterized in that** said intermediate fittings comprise a rod, called an intermediate rod, not parallel to the driving and driven rods, said intermediate rod being coupled, at one end, to the downstream end of the driving rod by means of an angle transmission suitable for converting an axial rotation of the driving rod into an axial rotation of the intermediate rod, said intermediate rod being coupled, at the other end, to the upstream end of the driven rod by means of an angle transmission suitable for converting an axial rotation of the intermediate rod into an axial rotation of the driven rod.

8. Vehicle according to claim 5, **characterized in that** said intermediate fittings comprise a succession of several intermediate rods (370, 371) connected to each other and to the driving and driven rods by angle transmissions (372, 373, 374).

9. Vehicle according to any one of claims 6 to 8, **characterized in that** the angle transmissions (31, 32; 372, 373, 374) are constant velocity angle transmissions.

10. Vehicle according to one of claims 1 to 9, **characterized in that** each stub pivot arm (145, 146; 45; 46) extends substantially parallel to the plane of the wheel with which it is associated.

11. Vehicle according to one of claims 1 or 2, **characterized in that**:

   - the vehicle has no tie bar,
   - the first steering gear comprises a link (460), called a support link, which extends in a plane substantially parallel to the steering plane and which carries the steering component (402), said support link being mounted for pivoting, at one end called the rotation end, around an axis fixed relative to the chassis and being articulated, at the other end, on the steering component;
   - the second steering gear comprises a link (461), called a support link, which extends in a plane substantially parallel to the steering plane and which carries the steered component (403) of the steering bar, said support link being mounted for pivoting, at one end called the rotation end, around an axis fixed relative to the chassis and being articulated, at the other end, on the steered component,
   - the first and second steering gears each comprise also at least:

      ■ a first rod (464, 465) which extends in a substantially transverse direction fixed relative to the chassis, and which has one end, called the upstream end, coupled to the rotation end of the support link by means of a coupling (462, 463) suitable for converting a pivoting of the support link into an axial rotation of the first rod, said first rod being guided in axial rotation in the vehicle by means of at least one bearing fixed relative to the chassis, the opposite end of the first rod being called the downstream end.
      ■ a drop arm (466, 467) called the primary drop arm, not parallel to the first rod, said primary drop arm having one end, called the upstream end, coupled to the downstream end of the first rod by means of a coupling suitable for converting an axial rotation of the first rod into a rotation of the primary drop arm around the axis of the first rod, the opposite end of said primary drop arm being called the downstream end,

■ a second rod (470, 471) which extends in a substantially longitudinal direction fixed relative to the chassis, and which has one end, called the upstream end, articulated on the downstream end of the primary drop arm, and an opposite end called the downstream end,

■ a drop arm (472, 473) called the secondary drop arm, mounted for pivoting, at one end called the rotation end, around an axis extending in a substantially transverse direction fixed relative to the chassis, said secondary drop arm having an opposite end, called the control end, on which the downstream end of the second rod is articulated,

■ an arm (476, 477) called steering arm, freely articulated, at one end called the upstream end, on the control end of the secondary drop arm and, at an opposite end called the downstream end, on the actuation end of the stub pivot arm.

12. Vehicle according to one of claims 5 to 11, **characterized in that** the rack housing and the steering bar are fitted between the dashboard and the vehicle engine.

13. Vehicle according to one of claims 5 to 12, **characterized in that** the rack housing and the steering bar are fitted at the rear of the vehicle.

14. Vehicle according to one of claims 1 to 13, **characterized in that** the correction plate (105; 5; 405) extends in a plane parallel to the steering plane (D).

15. Vehicle according to one of claims 1 to 14, **characterized in that** the assembly means comprise:

   - a stirrup (119; 19) formed of two opposite clevises and a core, the stirrup being mounted on the rack housing in such a way that the housing is able to pivot relative to the stirrup around an axis (165) defining the attachment axis of the housing, the stirrup clevises extending on either side of said housing,
   - a slide (121; 21) extending in a plane substantially parallel to the steering plane, substantially orthogonally to the steering bar when the wheels are straight, said slide having one end fixed to the stirrup,
- a bearing (121; 22) wherein the slide is able to slide, said bearing being mounted fixed relative to the chassis.

16. Vehicle according to one of claims 1 to 15, **characterized in that** the steering component is a bar (2) forming a slide and the steered component is a slide block (3) slipped onto said slide.

17. Vehicle according to one of claims 1 to 16, **characterized in that** one of the components of the steering bar is a rod (203) and the other component is a tube (202) wherein the rod is able to slide.

18. Vehicle according to one of claims 1 to 17, **characterized in that**:

- the correction plate (205) is formed of at least two stacked panels (254, 255) each having a slot (263, 264), said slots being stacked so as to form the correction slide rail (206), said slots being of different widths,
- the roller (207) is formed of at least two stacked discs (256, 257), one (256), the first one, of said discs being fitted in the slot in one (254), the first one, of the panels, the second disc (257) being fitted in the slot in the second panel (255), the first disc having a diameter smaller than the width of the slot in the first panel and being fitted so that there is some play provided between said disc and said slot along a longitudinal edge of the correction slide rail, the second disc having a diameter smaller than the width of the slot in the second panel and being fitted so that there is some play provided between said disc and said slot along the other longitudinal edge of the correction slide rail.

19. Vehicle according to one of claims 1 to 18, **characterized in that**:

- the correction slide rail (306) is extended at each of its ends by two slots forming slide rails (380, 381), called 90° deflection slide rails,
- the steering system is fitted with means, called housing displacement means, suitable, when they are activated by the vehicle driver and when the wheels are in the 90° skid-free turn position, for enabling the rack housing to move so as to oblige the roller (307) to move in one or other of the 90° deflection slide rails,
- each 90° deflection slide rail follows a curve suitable for enabling, when the housing displacement means are activated, a rotation of the wheel offside to the turn from a steering angle corresponding to a 90° skid-free turn to an angle substantially equal to 90°, without modifying the steering angle of the wheel nearside to the turn.

20. Vehicle according to one of claims 1 to 19, **characterized in that**:

- the correction plate (505) comprises a second slot forming a slide rail (580), called the special operation slide rail, wherein the roller is able to move, the correction slide rail and the special operation slide rail being merged in an area called the switch point,
- the steering system comprises switching means, which establish a normal operation mode wherein the roller (507) is guided in the correction slide rail (506) and a special operation mode wherein the roller is guided in the special operation slide rail (580), the steering system comprising means for controlling the switching means by the vehicle driver.

**Patentansprüche**

1. Kraftfahrzeug mit folgenden Teilen :

- ein Fahrgestell,
- Räder, davon mindestens zwei Antriebsräder (151, 152; 51, 52) vorne am Fahrzeug, wobei jedes Antriebsrad von einem Achsschenkel (149, 150; 49, 50) getragen wird, mit dem ein Arm (145, 146; 45, 46), der sogenannte Achsschenkelzapfenarm, fest verbunden ist, wobei der besagte Achsschenkel und der besagte Achsschenkelzapfenarm um eine Achse (147, 148; 47, 48), die sogenannte Achsschenkeldrehachse, drehbar montiert sind, wobei der Achsschenkelzapfenarm ein mit dem Achsschenkel fest verbundenes Ende und ein entgegengesetztes Ende (159, 160) aufweist, das sogenannte Betätigungsende,
- eine Lenkung mit folgenden Teilen:

. eine Lenksäule (118; 18), die von einem Lenkrad (117; 17) in axialer Drehung gesteuert wird, das von einem Fahrer des Fahrzeugs betätigt werden kann,
. ein Ritzel (110; 10), das von der Lenksäule in Drehung versetzt wird,
. eine Zahnstange (153), auf der das Ritzel greift,
. ein Zahnstangengehäuse (104; 4), das das besagte Ritzel und die besagte Zahnstange aufnimmt, **dadurch gekennzeichnet, daß**:

- die Lenkung eine Baugruppe umfaßt, die eine Stange (101; 1), die sogenannte Lenkstange, bildet, wobei die besagte Lenkstange mindestens zwei koaxiale Elemente (102, 103; 2, 3; 402, 403) umfaßt, die in einer axialen Richtung der besagten Lenkstange gegeneinander gleitend montiert sind, wobei das eine (102; 2; 402) der Elemente das Lenkelement genannt wird, das andere Element (103; 3; 403) das gelenkte Element genannt wird,

- das Lenkelement (102; 2; 402) das Zahnstangengehäuse durchquert und die Zahnstange trägt, so daß eine Drehung des Ritzels (110; 10) eine Translation des Lenkelements in der axialen Richtung der Lenkstange antreibt,

- das Zahnstangengehäuse eine Platte (102; 5; 405; 505) umfaßt, die sogenannte Korrekturplatte, die einen Schlitz umfaßt, der eine Gleitschiene (106; 6), die sogenannte Korrekturgleitschiene, bildet, wobei die besagte Korrekturgleitschiene eine Laufrolle (107; 7; 507) aufnimmt, die geeignet ist, entlang der besagten Korrekturgleitschiene zu verlaufen,

- die Lenkung zwei Arme (108, 109; 8, 9) umfaßt, die sogenannten Korrekturarme, wobei einer (108; 8) der besagten Korrekturarme gelenkig mit einem Ende an die Laufrolle montiert ist und mit dem anderen Ende an das Lenkelement, wobei der andere Korrekturarm (109; 9) mit einem Ende gelenkig an die Laufrolle montiert ist und mit dem anderen Ende an das gelenkte Element, so daß die Lenkstange (101; 1) und die beiden Korrekturarme ein je nach der Position der Laufrolle in der Korrekturgleitschiene (106; 6) ein verformbares Dreieck bilden,

- die Lenkung Mittel (119, 120, 121, 122; 19, 20, 21, 22) zur Montage des Zahnstangengehäuses im Fahrzeug umfaßt, die geeignet sind, ein Schwenken des Zahnstangengehäuses (104; 4) in einer Ebene (D), der sogenannten Lenkebene um eine Achse (165) des besagten Gehäuses zuzulassen, der sogenannten Befestigungsachse, wobei die Montagemittel außerdem geeignet sind, jegliche Verschiebung der Befestigungsachse in einer Querrichtung des Fahrgestells zu untersagen und eine Verschiebung der besagten Befestigungsachse in einer Richtung zuzulassen, die in der Lenkrichtung und in einer Längsrichtung des Fahrgestells enthalten ist,

- die Lenksäule (118; 18) geeignet ist, jegliche Verschiebung des Zahnstangengehäuses (104; 4) zu absorbieren,

- die Lenkung ein erstes Gestänge (198; 23, 29, 33, 37, 41) umfaßt, das das Lenkelement (102; 2; 402) mit dem Betätigungsende des einen (145; 45) ersten der Achsschenkelzapfenarme verbindet, und ein zweites Gestänge (199; 24, 30, 34, 38, 42), das das gelenkte Element (103; 3; 403) mit dem Betätigungsende des zweiten Achsschenkelzapfenarms verbindet,

- die Korrekturgleitschiene (106; 6) einer nach dem ersten und dem zweiten Gestänge geeigneten Kurve folgt, damit sich die Achsschenkel der Räder des Fahrzeugs in Richtungen erstrekken, die sich jederzeit an einem Punkt schneiden.

2. Fahrzeug nach Anspruch 1, **dadurch gekennzeichnet, daß** die Lenksäule (18) mindestens zwei koaxiale Teile (13, 14) umfaßt, die in einer axialen Richtung der Lenksäule gegeneinander gleitend montiert sind, von denen ein Teil an die Achse des Lenkrads und ein Teil an das Ritzel gekuppelt ist.

3. Fahrzeug nach einem der Ansprüche 1 oder 2, **dadurch gekennzeichnet, daß**:

- sich die Lenkstange (101) in der Nähe der Vorderachse erstreckt,
- das erste Gestänge einen ersten Kupplungshebel (198) umfaßt, der gelenkig an einem Ende des Lenkelements beziehungsweise am Betätigungselement des ersten Achsschenkelzapfenarms befestigt ist,
- das zweite Gestänge einen zweiten Kupplungshebel (199) umfaßt, der gelenkig an einem Ende des gelenkten Elements beziehungsweise am Betätigungselement des zweiten Achsschenkelzapfenarms befestigt ist.

4. Fahrzeug nach Anspruch 3, **dadurch gekennzeichnet, daß** die Lenkung mindestens einen Höhenzirkel (192, 193) umfaßt, der eines der Elemente (102, 103) der Lenkstange mit dem Fahrgestell verbindet.

5. Fahrzeug nach einem der Ansprüche 1 oder 2, **dadurch gekennzeichnet, daß**:

- das Fahrzeug keine Kupplungsstange hat,
- das erste Gestänge einen Spurhebel (23), den sogenannten Traghebel, umfaßt, der sich in einer zur Lenkebene deutlich parallelen Ebene erstreckt, und der das Lenkelement (2) trägt, wobei der besagte Traghebel an einem Ende, dem sogenannten Drehungsende, um eine im Verhältnis zum Fahrgestell feste Achse drehend und gelenkig mit dem anderen Ende am Lenkelement montiert ist,
- das zweite Gestänge einen Spurhebel (24; 324), den sogenannten Traghebel, umfaßt, der sich in einer zur Lenkebene deutlich parallelen Ebene erstreckt, und der das gelenkte Element (3) trägt, wobei der besagte Traghebel an einem Ende, dem sogenannten Drehungsende, um eine im Verhältnis zum Fahrgestell feste Achse drehend und gelenkig mit dem anderen Ende am gelenkten Element montiert ist,

- das erste und das zweite Gestänge jeweils mindestens folgende Teile umfassen

. eine Stange (29, 30; 330), die sogenannte Führungsstange, die sich orthogonal zum Traghebel (23, 24; 324) erstreckt, diese Stange ein Ende, das sogenannte obere Ende, aufweist, das vermittels einer Kupplung (25, 27) an das Drehende des Traghebels angekuppelt ist, die geeignet ist, ein Drehen des Traghebels in eine axiale Drehung der Führungsstange umzuwandeln, wobei das entgegengesetzte Ende der Führungsstange das untere Ende genannt wird,
. eine Stange (33, 34; 334), die sogenannte geführte Stange, die ein Ende, das sogenannte vorherige Ende, aufweist, das vermittels von Organen (31, 32; 372, 370, 373, 371, 374), den sogenannten Zwischenorganen, mit der Führungsstange verbunden ist, die geeignet sind, eine axiale Drehung der Führungsstange in eine axiale Drehung der geführten Stange umzuwandeln, wobei die besagte geführte Stange ein entgegengesetztes Ende aufweist, das sogenannte untere Ende,
. einen Hebel (37, 38; 338), der nicht parallel zur geführten Stange verläuft, und dieser Hebel weist ein Ende auf, das sogenannte obere Ende des Hebels, das vermittels einer Kupplung (35, 36) an das untere Ende der geführten Stange angekuppelt ist, die geeignet ist, eine axiale Drehung der geführten Stange in eine Drehung des Hebels um die Achse der besagten geführten Stange umzuwandeln, wobei das entgegengesetzte Ende des Hebels der Führungsstange das untere Ende des Hebels genannt wird,
. eine Stange (41, 42; 342), die sogenannte Verbindungsstange, die frei gelenkig mit einem Ende am unteren Ende des Hebels (37, 38; 338) und mit dem anderen Ende am Betätigungselement des Achsschenkelzapfenarms (45, 46; 346) befestigt ist.

6. Fahrzeug nach Anspruch 5, **dadurch gekennzeichnet, daß** die besagten Zwischenorgane eine Umlenkung (31, 32) umfassen, die das untere Ende der Führungsstange und das obere Ende der geführten Stange direkt ankuppelt.

7. Fahrzeug nach Anspruch 5, **dadurch gekennzeichnet, daß** die besagten Zwischenorgane eine Stange umfassen, die sogenannte Zwischenstange, die nicht parallel mit der Führungsstange und der geführten Stange verläuft, wobei die besagte Zwischenstange mit einem Ende an das untere Ende der Führungsstange angekuppelt ist, dies vermittels einer Umlenkung, die geeignet ist, eine axiale Drehung der Führungsstange in eine axiale Drehung der Zwischenstange umzuwandeln, und die besagte Zwischenstange mit dem anderen Ende an das obere Ende der geführten Stange angekuppelt ist, dies vermittels einer Umlenkung, die geeignet ist, eine axiale Drehung der Zwischenstange in eine axiale Drehung der geführten Stange umzuwandeln.

8. Fahrzeug nach Anspruch 5, **dadurch gekennzeichnet, daß** die besagten Zwischenorgane eine Aufeinanderfolge mehrerer Zwischenstangen (370, 371) umfassen, die untereinander und mit der Führungsstange und der geführten Stange durch Umlenkungen (372, 373, 374) verbunden sind.

9. Fahrzeug nach einem beliebigen der vorstehenden Ansprüche 6 bis 8, **dadurch gekennzeichnet, daß** die Umlenkungen (31, 32; 372, 373, 374) homokinetische Umlenkungen sind.

10. Fahrzeug nach einem beliebigen der vorstehenden Ansprüche 1 bis 9, **dadurch gekennzeichnet, daß** sich jeder Achsschenkelzapfenarm (145, 146; 45; 46) deutlich parallel zur Ebene des Rads erstreckt, dem er zugeordnet ist.

11. Fahrzeug nach einem der Ansprüche 1 oder 2, **dadurch gekennzeichnet, daß**:

- das Fahrzeug keine Kupplungsstange hat,
- das erste Gestänge einen Spurhebel (460), den sogenannten Traghebel, umfaßt, der sich in einer zur Lenkebene deutlich parallelen Ebene erstreckt, und der das Lenkelement (402) trägt, wobei der besagte Traghebel an einem Ende, dem sogenannten Drehungsende, um eine im Verhältnis zum Fahrgestell feste Achse drehend und gelenkig mit dem anderen Ende am Lenkelement montiert ist,
- das zweite Gestänge einen Spurhebel (461), den sogenannten Traghebel, umfaßt, der sich in einer zur Lenkebene deutlich parallelen Ebene erstreckt, und der das gelenkte Element (403) trägt, wobei der besagte Traghebel an einem Ende, dem sogenannten Drehungsende, um eine im Verhältnis zum Fahrgestell feste Achse drehend und gelenkig mit dem anderen Ende am gelenkten Element montiert ist,
- das erste und das zweite Gestänge jeweils mindestens folgende Teile umfassen

. eine erste Stange (464, 465), die sich in einer deutlichen dem Fahrgestell gegenüber festen Querrichtung erstreckt, und die ein Ende aufweist, das sogenannte obere Ende, das an das Drehende des Traghebels angekuppelt ist, dies vermittels einer Kupplung (462, 463), die geeignet ist, ein Drehen des Traghebels in eine axiale Drehung der ersten Stange umzuwandeln, wobei die besagte erste Stange in axiale Drehung im Fahrzeug geführt wird, dies vermittels mindestens eines dem Fahrgestell gegenüber festen Lagers, wobei das entgegengesetzte Ende der ersten Stange das untere Ende genannt wird,

. eine hängende Strebe (466, 467), die sogenannte primäre hängende Strebe, die nicht parallel zur ersten Stange verläuft, wobei diese primäre hängende Strebe ein Ende aufweist, das sogenannte obere Ende, das an das untere Ende der ersten Stange vermittels einer Kupplung angekuppelt ist, die geeignet ist, eine axiale Drehung der ersten Stange in eine Drehung der primären hängenden Strebe um die Achse der ersten Stange umzuwandeln, wobei das entgegengesetzte Ende der besagten primären hängenden Strebe unteres Ende genannt wird,

. eine zweite Stange (470, 471), die sich in einer deutlichen dem Fahrgestell gegenüber festen Längsrichtung erstreckt, und die ein Ende aufweist, das sogenannte obere Ende, das gelenkig am unteren Ende der primären hängenden Stange befestigt ist, und ein entgegengesetztes Ende, das sogenannte untere Ende,

. eine hängende Strebe (472, 473), die sogenannte sekundäre hängende Strebe, die drehend an ein Ende, das sogenannte Drehende, montiert ist, dies um eine Achse, die sich in einer deutlichen dem Fahrgestell gegenüber festen Querrichtung erstreckt, wobei die besagte sekundäre hängende Strebe ein entgegengesetztes Ende aufweist, das sogenannte Steuerende, auf dem das untere Ende der zweiten Stange gelenkig befestigt ist,

. eine Stange (476, 477), das sogenannte Lenkgestänge, das frei gelenkig mit einem Ende, dem sogenannten oberen Ende, am Steuerende der sekundären hängenden Strebe befestigt ist, und mit einem entgegengesetzten Ende, dem sogenannten unteren Ende, am Betätigungsende des Achsschenkelzapfenarms.

12. Fahrzeug nach einem beliebigen der vorstehenden Ansprüche 5 bis 11, **dadurch gekennzeichnet, daß** das Zahnstangengehäuse und die Lenkstange zwischen der Motortrennwand und dem Motor des Fahrzeugs gestaltet sind.

13. Fahrzeug nach einem beliebigen der vorstehenden Ansprüche 5 bis 12, **dadurch gekennzeichnet, daß** das Zahnstangengehäuse und die Lenkstange hinten im Fahrzeug gestaltet sind.

14. Fahrzeug nach einem beliebigen der vorstehenden Ansprüche 1 bis 13, **dadurch gekennzeichnet, daß** sich die Korrekturplatte (105; 5; 405) in einer zur Lenkebene (D) parallelen Ebene erstreckt.

15. Fahrzeug nach einem beliebigen der vorstehenden Ansprüche 1 bis 14, **dadurch gekennzeichnet, daß** die Montagemittel folgende Teile umfassen:

   - einen Sattel (119; 19), der aus zwei gegenüberliegenden Kappen und einem Mittelteil gebildet wird, wobei der Sattel so auf das Zahnstangengehäuse montiert ist, daß das Gehäuse gegenüber dem Sattel um eine Achse (165) schwenken kann, die die Befestigungsachse des Gehäuses definiert, wobei sich die Kappen des Sattels zu beiden Seiten des besagten Gehäuses erstrecken,
   - einen Schieber (121, 21), der sich in einer zur Lenkebene deutlich parallelen Ebene und deutlich orthogonal zur Lenkstange erstreckt, wenn die Räder gerade ausgerichtet sind, wobei der besagte Schieber ein am Sattel befestigtes Ende aufweist,
   - ein Lager (121; 22), in dem der Schieber gleiten kann, wobei das besagte Lager im Verhältnis zum Fahrgestell fest montiert ist.

16. Fahrzeug nach einem beliebigen der vorstehenden Ansprüche 1 bis 15, **dadurch gekennzeichnet, daß** das Lenkelement eine Stange (2) ist, die einen Schieber bildet und das gelenkte Element eine Kulisse (3) ist, die auf dem besagten Schieber aufgesetzt ist.

17. Fahrzeug nach einem beliebigen der vorstehenden Ansprüche 1 bis 16, **dadurch gekennzeichnet, daß** eines der Elemente der Lenkstange eine Stange (203) ist und das andere Element ein Rohr (202), in dem die besagte Stange gleiten kann.

18. Fahrzeug nach einem beliebigen der vorstehenden Ansprüche 1 bis 17, **dadurch gekennzeichnet, daß**

   - die Korrekturplatte (205) aus mindestens zwei übereinander liegenden Platten (254, 255) gebildet wird, von denen jede einen Schlitz (263, 264) aufweist, wobei die besagten Schlitze übereinander liegen und die Korrekturgleitschiene (206) bilden, wobei die besagten Schlitze unterschiedliche Breiten aufweisen,
   - die Laufrolle (207) aus mindestens zwei übereinanderliegenden Scheiben (256, 257) gebildet wird, wobei die eine (256) erste der besagten Scheiben im Schlitz der zweiten Platte (255) gestaltet ist, die erste Scheibe einen Durchmesser kleiner als die Breite des Schlitzes der ersten Platte aufweist und so gestaltet ist, daß zwischen der besagten Scheibe und dem besagten Schlitz entlang einer Längskante der Korrekturgleitschiene ein Spiel vorhanden ist, wobei die zweite Scheibe einen Durchmesser kleiner als die Breite des Schlitzes der zweiten Platte aufweist und so gestaltet ist, daß zwischen der besagten Scheibe und dem besagten Schlitz entlang der anderen Längskante der Korrekturgleitschiene ein Spiel vorhanden ist.

**19.** Fahrzeug nach einem beliebigen der vorstehenden Ansprüche 1 bis 18, **dadurch gekennzeichnet, daß**:

- die Korrekturgleitschiene (306) an jedem Ende durch zwei Schlitze verlängert wird, die Gleitschienen (380, 381) bilden, sogenannte Einschlaggleitschienen im 90° Winkel,
- die Lenkung mit Mitteln versehen ist, sogenannten Mitteln zur Verschiebung des Gehäuses, die geeignet sind, wenn sie vom Fahrer betätigt werden und die Räder in Kurvenposition ohne Gleiten um 90° sind, das Zahnstangengehäuse so verschieben zu können, daß die Laufrolle (307) gezwungen wird, sich in der einen oder der anderen der Einschlaggleitschienen im 90° Winkel zu verschieben,
- jede Einschlaggleitschiene im 90° Winkel eine Kurve verfolgt, die geeignet ist, wenn die Mittel zur Verschiebung des Zahnstangengehäuses betätigt werden, eine Drehung des äußeren Rads in der Kurve ab einem Einschlagwinkel zu erlauben, der einer Kurve ohne Gleiten um 90° entspricht, und dies bis zu einem 90° deutlich gleichen Winkel, ohne den Einschlagwinkel des inneren Rads in der Kurve zu verändern.

**20.** Fahrzeug nach einem beliebigen der vorstehenden Ansprüche 1 bis 19, **dadurch gekennzeichnet, daß**:

- die Korrekturplatte (505) einen zweiten Schlitz umfaßt, der eine Gleitschiene (580) bildet, die sogenannte Spezialfunktions-Gleitschiene, in dem sich die Laufrolle bewegen kann, wobei die Korrekturgleitschiene und die Spezialfunktions-Gleitschiene in einer Zone zusammenlaufen, der sogenannten Weichenzone,
- die Lenkung Mittel zur Weichenstellung umfaßt, die einen normalen Funktionsmodus bestimmen, in dem die Laufrolle (507) in der Korrekturgleitschiene (506) geführt wird, und einen Spezialfunktionsmodus, in dem die Laufrolle in einer Spezialfunktions-Gleitschiene (580) geführt wird, wobei die Lenkung Mittel zur Steuerung der Mittel zur Weichenstellung durch den Fahrer umfaßt.

EP 2 015 978 B1

# Fig 1

Fig 2

EP 2 015 978 B1

Fig 3

EP 2 015 978 B1

Fig 4

Fig 5

Fig 6

Fig 7

Fig 8

Fig 9

Fig 11

Fig 14

Fig 10

Fig 12

Fig 13

EP 2 015 978 B1

Fig 15

EP 2 015 978 B1

Fig 16

EP 2 015 978 B1

Fig 17

EP 2 015 978 B1

Fig 18

Fig 19

504
505
506
507
508
509
580

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1405629
- US 6272409 B
- US 5143400 A